# EUROPEAN PATENT APPLICATION

(11) **EP 2 947 826 A1**
(43) Date of publication of application: **25.11.2015**
(21) Application number: 14740217.6
(22) Date of filing: 20.01.2014
(51) Int. Cl.: H04L 12/717, H04L 12/66

(54) **CONTROL APPARATUS, COMMUNICATION APPARATUS, COMMUNICATION SYSTEM, SWITCH CONTROL METHOD AND PROGRAM**

(30) Priority: 21.01.2013 JP 2013008835
(71) Applicant: NEC Corporation, Tokyo 108-8001 (JP)
(72) Inventor: CHIBA, Yasunobu, Tokyo 108-8001 (JP); SUGYOU, Kazushi, Tokyo 108-8001 (JP)
(74) Representative: Robson, Aidan John
(86) International application number: PCT/JP2014/050923
(87) International publication number: WO 2014/112616

(57) **Abstract**

The present invention reduces burdens in managing flow entries set in a switch(es) in a centralized-control-type network. A control apparatus sets a first entry(ies) for filtering packets received by the switch(es) in a first table(s) included in the switch(es) and sets a second entry(ies) including a rule(s) for processing a packet(s) selected by the first entry(ies) from the received packets in a second table(s) included in the switch(es).

## Description

### TECHNICAL FIELD

### [REFERENCE TO RELATED APPLICATION]

The present invention is based upon and claims the benefit of the priority of Japanese patent application No. 2013-008835, filed on January 21, 2013, the disclosure of which is incorporated herein in its entirety by reference thereto.

The present invention relates to a control apparatus, a communication apparatus, a communication system, a switch control method, and a program. In particular, it relates to: a control apparatus that controls switches arranged in a network in a centralized manner; a communication system; a switch control method; and a program.

### BACKGROUND

In recent years, a technique referred to as OpenFlow has been proposed (see Non-Patent Literatures 1 and 2). OpenFlow recognizes communications as end-to-end flows and performs path control, failure recovery, load balancing, and optimization on a per-flow basis. Each OpenFlow switch according to Non-Patent Literature 2 has a secure channel for communication with an OpenFlow controller and operates according to a flow table(s) suitably added or rewritten by the OpenFlow controller. In a flow table, a set of the following three is defined for each flow: match conditions (Match Fields) against which a packet header is matched; flow statistical information (Counters); and instructions (Instructions) that define at least one processing content (see "4.1 Flow Table" in Non-Patent Literature 2).

For example, when an OpenFlow switch receives a packet, the OpenFlow switch searches the flow table(s) for an entry having a match condition that matches header information of the received packet (see "4.3 Match Fields" in Non-Patent Literature 2). If, as a result of the search, the OpenFlow switch finds an entry that matches the received packet, the OpenFlow switch updates the flow statistical information (Counters) and processes the received packet on the basis of a processing content(s) (packet transmission from a specified port, flooding, dropping, etc.) written in the Instructions field of the entry. If, as a result of the search, the OpenFlow switch does not find an entry that matches the received packet, the OpenFlow switch transmits an entry setting request to the OpenFlow controller via the secure channel. Namely, the OpenFlow requests the OpenFlow controller to determine a processing content(s) for the received packet (Packet-In message). The OpenFlow switch receives a flow entry that defines the processing content(s) and updates the flow table(s). In this way, by using an entry stored in the flow table(s) as a packet handling operation, the OpenFlow switch performs packet forwarding.

According to OpenFlow Switch Specification Version 1.1.0 in Non-Patent Literature 2, a command (Go-to Table) for instructing a switch to refer to another flow table can be set as a processing content (Instruction). Namely, it is possible to perform pipeline processing in which a plurality of processing contents are performed by using a plurality of flow tables (see "4.1.1 Pipeline Processing" in Non-Patent Literature 2).

### CITATION LIST

### PATENT LITERATURE

Non-Patent Literature 1:
   Nick McKeown, and seven others, "OpenFlow: Enabling Innovation in Campus Networks," [online], [searched on November 22, 2012], Internet <URL:http://www.openflow.org/documents/openflow-wp-latest.pdf>
Non-Patent Literature 2:
   "OpenFlow Switch Specification" Version 1.1.0 Implemented (Wire Protocol 0x02), [online], [searched on November 22, 2012], Internet <URL:http://www.openflow.org/documents/openflow-spec-v1.1.0.pdf>

### SUMMARY

### TECHNICAL PROBLEM

The following analysis has been given by the present inventor. As described above, Non-Patent Literature 2 discloses packet processing that is performed by using a plurality of flow tables. However, Non-Patent Literature 2 discloses no more than rewriting a packet header in accordance with an entry in a certain flow table and searching the next flow table for a relevant entry that matches the rewritten header in pipeline processing, as described above. Namely, Non-Patent Literature 2 does not disclose specific usage of the plurality of flow tables.

While Non-Patent Literature 1 discloses descriptions of OpenFlow switches as described above, Non-Patent Literature 1 does not disclose that these switches include a plurality of flow tables.

It is an object of the present invention to provide a control apparatus, a communication apparatus, a communication system, a switch control method, and a program that can contribute to reducing burdens in managing entries set in switches in a centralized-control-type network.

### SOLUTION TO PROBLEM

According to a first aspect, there is provided a control apparatus, setting an entry(ies) including a rule(s) for processing a packet(s) in a switch(es); wherein the control apparatus sets a first entry(ies) for filtering packets received by the switch(es) in a first table(s) included in the switch(es); and wherein the control apparatus sets a second entry(ies) including a rule(s) for processing a packet(s) selected by the first entry(ies) from the received packets in a second table(s) included in the switch(es).

According to a second aspect, there is provided a communication apparatus, receiving an entry(ies) including a rule(s) for processing a packet(s) from a control apparatus and processing the packet(s) in accordance with the entry(ies), the communication apparatus comprising: a first table(s) that stores a first entry(ies) for filtering packets received by the communication apparatus; and a second table(s) that stores a second entry(ies) including a rule(s) for processing a packet(s) selected by the first entry(ies) from the received packets.

According to a third aspect, there is provided a communication system, comprising: a communication apparatus(es); and a control apparatus; wherein the communication apparatus(es) comprises: a first table(s) that stores a first entry(ies) for filtering received packets; and a second table(s) that stores a second entry(ies) including a rule(s) for processing a packet(s) selected by the first entry(ies) from the received packets; wherein the communication apparatus(es) receives an entry(ies) to be stored in the first or second table from the control apparatus and processes the packets in accordance with the entry(ies); wherein the control apparatus sets the first entry(ies) for filtering packets received by the switch(es) in the first table(s) included in the switch(es); and wherein the control apparatus sets the second entry(ies) including a rule(s) for processing a packet(s) selected by the first entry(ies) from the received packets in the second table(s) included in the switch(es).

According to a fourth aspect, there is provided a switch control method, comprising steps of: causing a control apparatus, which sets an entry(ies) including a rule(s) for processing a packet(s) in a switch(es), to set a first entry(ies) for filtering packets received by the switch(es) in a first table(s) included in the switch(es); and causing the control apparatus to set a second entry(ies) including a rule(s) for processing a packet(s) selected by the first entry(ies) from the received packets in a second table(s) included in the switch(es). This method is associated with a certain machine, namely, with a control apparatus that controls switches.

According to a fifth aspect, there is provided a program, causing a computer, which sets an entry(ies) including a rule(s) for processing a packet(s) in a switch(es), to perform processing for: setting a first entry(ies) for filtering packets received by the switch(es) in a first table(s) included in the switch(es); and setting a second entry(ies) including a rule(s) for processing a packet(s) selected by the first entry(ies) from the received packets in a second table(s) included in the switch(es). This program can be recorded in a computer-readable (non-transient) storage medium. Namely, the present invention can be embodied as a computer program product.

### ADVANTAGEOUS EFFECTS OF INVENTION

According to the present invention, the packets received by a switch(es) can be filtered by using a plurality of tables.

### BRIEF DESCRIPTION OF THE DRAWINGS

Fig. 1 illustrates a configuration according to a first exemplary embodiment of the present invention.
Fig. 2 illustrates an operation according to the first exemplary embodiment of the present invention.
Fig. 3 illustrates a configuration of a communication system according to the first exemplary embodiment of the present invention.
Fig. 4 illustrates a configuration of a switch according to the first exemplary embodiment of the present invention.
Fig. 5 illustrates exemplary tables according to the first exemplary embodiment of the present invention.
Fig. 6 illustrates a configuration of a control apparatus according to the first exemplary embodiment of the present invention.
Fig. 7 illustrates a configuration of a variation of the control apparatus according to the first exemplary embodiment of the present invention.
Fig. 8 illustrates other exemplary tables according to the first exemplary embodiment of the present invention.
Fig. 9 illustrates a configuration of a communication system according to the first exemplary embodiment of the present invention.
Fig. 10 illustrates entry setting examples when a switch according to the first exemplary embodiment of the present invention uses a single table.
Fig. 11 illustrates exemplary tables according to the first exemplary embodiment of the present invention.
Fig. 12 illustrates a configuration of a communication system according to a second exemplary embodiment of the present invention.
Fig. 13 illustrates a detailed configuration of a switch according to the second exemplary embodiment of the present invention.
Fig. 14 is a functional block diagram illustrating a detailed configuration of a control apparatus according to the second exemplary embodiment of the present invention.
Fig. 15 illustrates exemplary virtual network configuration information stored in a virtual network configuration management unit in the control apparatus according to the second exemplary embodiment of the present invention.
Fig. 16 illustrates exemplary entries in a first table in a switch, the entries being set by the control apparatus according to the second exemplary embodiment of the present invention.
Fig. 17 illustrates exemplary entries in a second table in the switch, the entries being set by the control apparatus according to the second exemplary embodiment of the present invention.
Fig. 18 illustrates exemplary entries in a third table in the switch, the entries being set by the control apparatus according to the second exemplary embodiment of the present invention.
Fig. 19 illustrates an exemplary access policy stored in an access policy management unit in the control apparatus according to the second exemplary embodiment of the present invention.
Fig. 20 illustrates operation contents in the second table in accordance with the access policy in Fig. 19.
Fig. 21 illustrates exemplary virtual network configuration information updated by connection of a switch 200B in Fig. 12.
Fig. 22 illustrates operation contents in the first table in accordance with the connection of the switch 200B in Fig. 12.
Fig. 23 illustrates operation contents in the third table in accordance with the connection of the switch 200B in Fig. 12.
Fig. 24 illustrates an operation of the switch according to the first exemplary embodiment of the present invention.
Fig. 25 illustrates packet forwarding paths realized by the entries set in the tables in Figs. 22 and 23.
Fig. 26 illustrates exemplary entries in the first table set in the switch by a control apparatus according to a third exemplary embodiment of the present invention.
Fig. 27 illustrates an exemplary entry in the second table set in the switch by the control apparatus according to the third exemplary embodiment of the present invention.
Fig. 28 illustrates exemplary entries in the third table set in the switch by the control apparatus according to the third exemplary embodiment of the present invention.
Fig. 29 illustrates operation contents in the first table in accordance with the connection of the switch 200B in Fig. 12.
Fig. 30 illustrates operation contents in the second table in accordance with the connection of the switch 200B in Fig. 12.
Fig. 31 illustrates operation contents in the third table in accordance with the connection of the switch 200B in Fig. 12.
Fig. 32 illustrates an operation of the switch according to the third exemplary embodiment of the present invention.

### MODES FOR CARRYING OUT THE INVENTION

### [First exemplary embodiment]

First, a first exemplary embodiment of the present invention will be described with reference to the drawings. In the following exemplary embodiments, various components are denoted by reference characters for the sake of convenience. Namely, the following reference characters are merely used as examples to facilitate understanding of the present invention, not to limit the present invention to the illustrated modes.

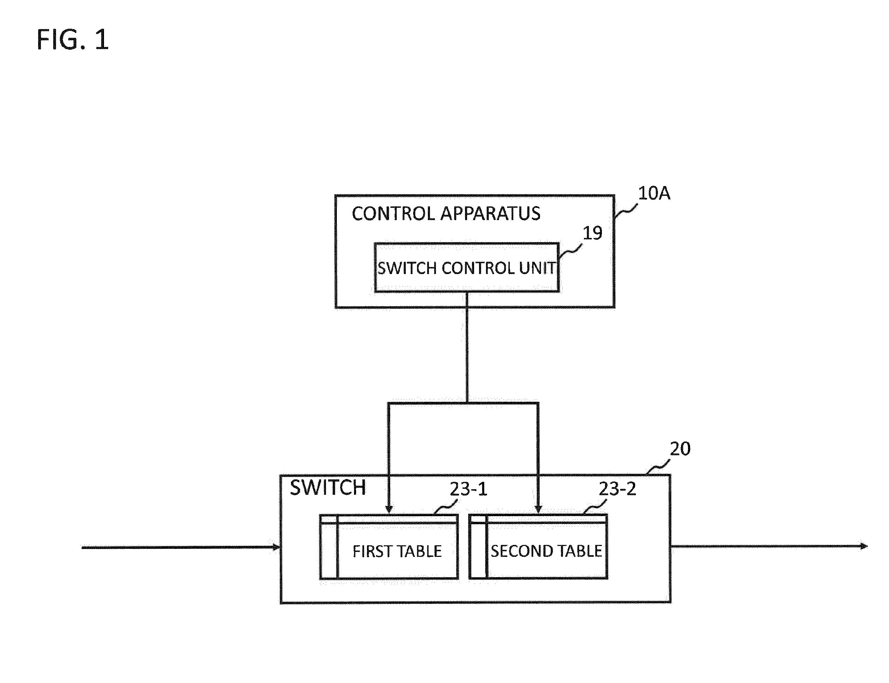

As illustrated in Fig. 1, a first exemplary embodiment is applicable to a communication system which includes a control apparatus that includes a switch control unit. This switch control unit causes each switch 20, which processes the received packets by referring to a plurality of tables, to hold a first table 23-1 for filtering the received packets and a second table 23-2 for processing the packets selected by the first table 23-1. Each switch 20 may be a physical switch or a virtual switch that operates on an apparatus such as a server. Alternatively, each switch 20 may be a virtual switch that virtually operates on a terminal such as a mobile phone or a smartphone.

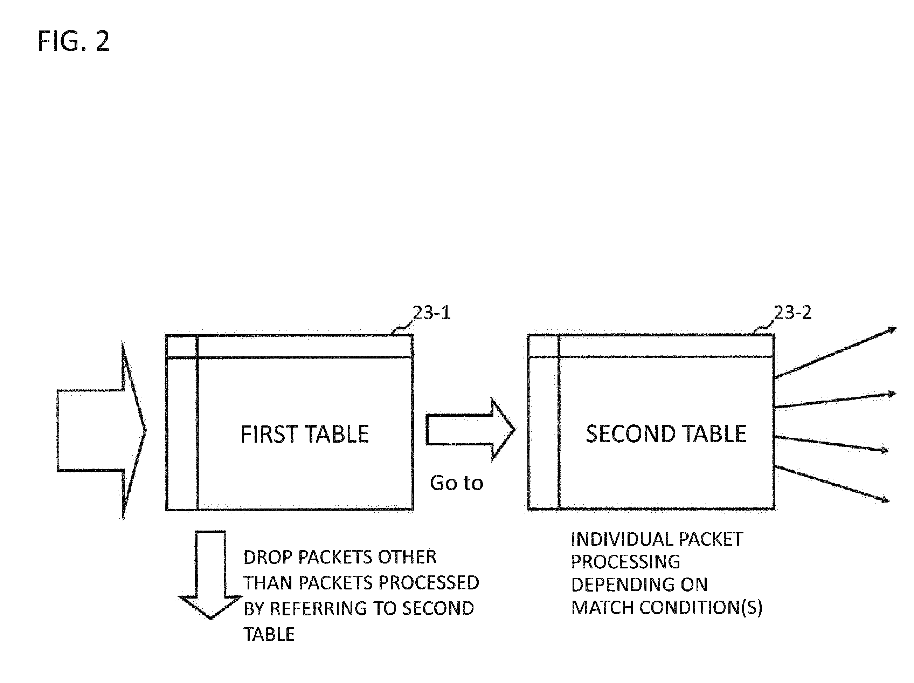

For example, in the first table 23-1 in a switch 20, there is set an entry(ies) in which a match condition(s) for determining a filtering target packet(s) and a processing content(s) such as dropping are associated with each other. In the first table 23-1, there is also set an entry(ies) in which a match condition(s) for determining other packets and a processing content(s) for instructing the switch 20 to process the packets by referring to the second table 23-2 are associated with each other. With this configuration, as illustrated in Fig. 2, the switch 20 refers to its own first table 23-1 to sort out packets that are processed by referring to the second table 23-2 or the like from other packets. Next, the switch 20 refers to its own second table 23-2, determines processing that is applied to the selected packets, and performs forwarding processing, etc. As a result of the filtering performed by using the first table 23-1, for example, packets causing a loop or abnormal packets may be dropped. In addition, access control may be performed on a communication between certain hosts or on certain packets, for example. Other than dropping, examples of the processing applied to these packets include redirection to a predetermined destination. In addition, while only one first table 23-1 is illustrated in the example in Fig. 2, a plurality of tables that correspond to the first table 23-1 may be provided. In this way, by using each of the tables, the filtering can be performed from different perspectives.

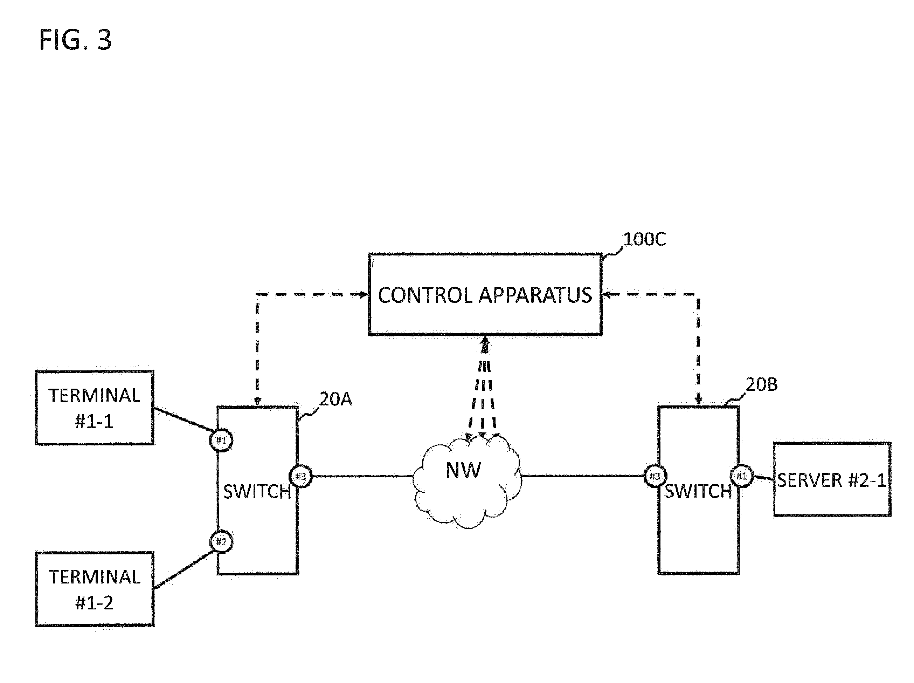

Fig. 3 illustrates a configuration of a communication system according to the first exemplary embodiment. The first exemplary embodiment of the present invention can be realized by a control apparatus that realizes communications among terminals and a server by controlling a plurality of switches 20A and 20B.

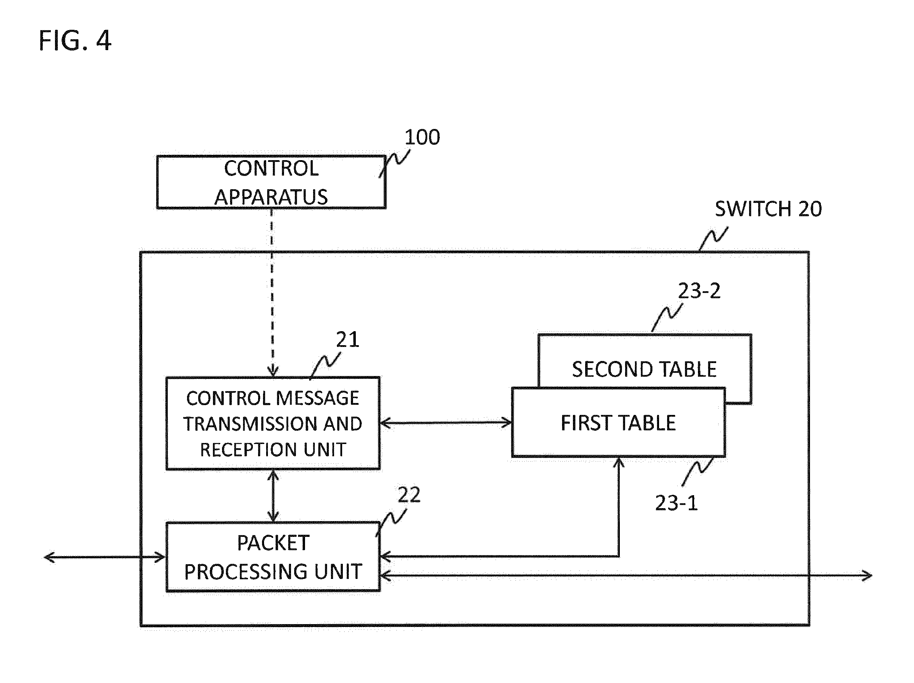

Fig. 4 illustrates a detailed configuration of the switches 20A and 20B (any one of the switches 20A and 20B will be referred to as a "switch 20" unless these switches need to be distinguished from each other). As illustrated in Fig. 4, the switch 20 includes a control message transmission and reception unit 21, a packet processing unit 22, and tables 23. Hereinafter, any one of the first table and the second table will be referred to as a "table 23" unless these tables need to be distinguished from each other.

The control message transmission and reception unit 21 receives control messages relating to table operations from the control apparatus 100 and updates the relevant table(s). In addition, the control message transmission and reception unit 21 requests the control apparatus 100 to transmit an entry(ies) to be registered in the relevant table(s) 23 and performs an operation in accordance with a packet output instruction given from the control apparatus 100.

When receiving a packet, the packet processing unit 22 refers to the table(s) 23, searches for an entry having a match condition(s) that matches the received packet, and performs an operation defined in the entry.

As described above, the tables 23 include the first table and the second table.

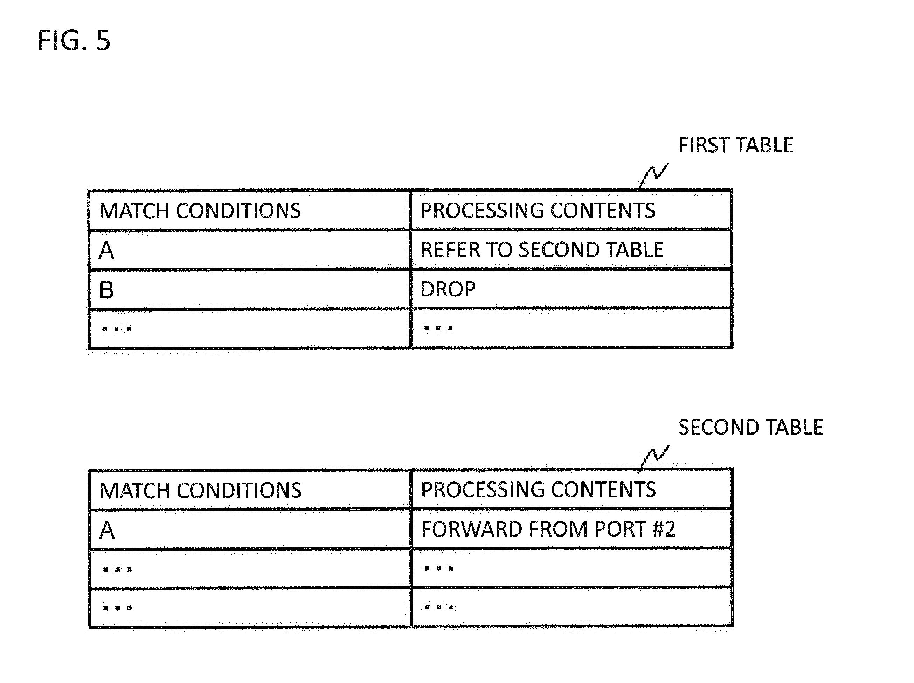

Fig. 5 illustrates an exemplary configuration of the tables 23. In the example in Fig. 5, a policy is applied in which, while communication is permitted for the packets that match a match condition "A," the packets that match a match condition "B" are dropped.

In accordance with the first entry in the first table, the switch 20 refers to the second table to process the packets that match the match condition "A." In accordance with the second entry in first table, the switch 20 drops the packets that match the match condition "B."

In addition, in the first entry in the second table, there is set processing for forwarding the packets that match the match condition "A" from a port #2.

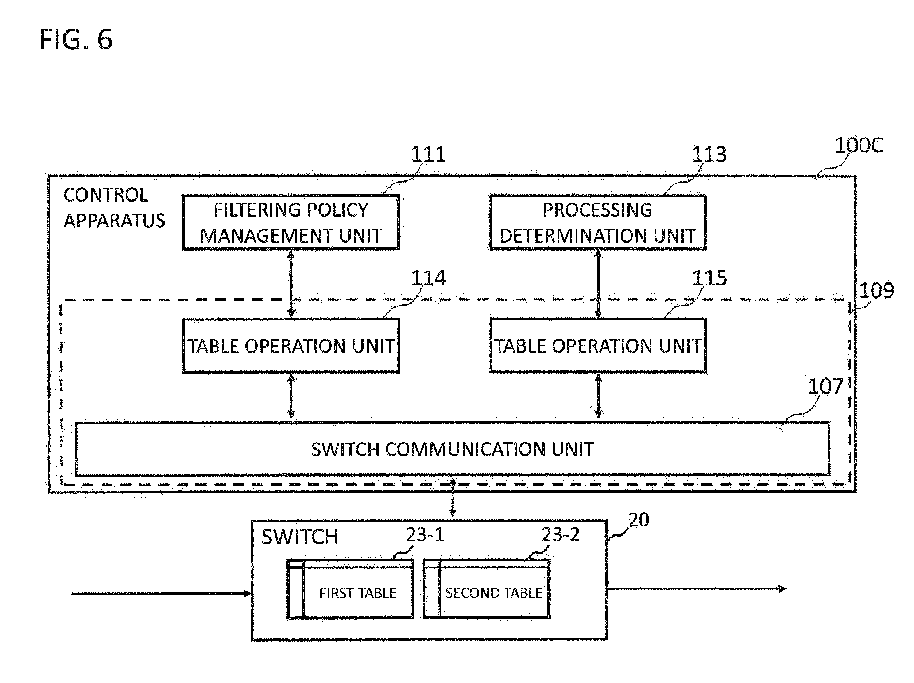

Fig. 6 illustrates a configuration of a control apparatus 100C according to the first exemplary embodiment. The control apparatus 100C includes a filtering policy management unit 111, a processing determination unit 113, two table operation units 114 and 115, and a switch communication unit 107. The control apparatus 100C controls the switch 20 by using these units. In the example in Fig. 6, two table operation units are included in the control apparatus 100C. However, only one table operation unit may be included in the control apparatus 100C.

More specifically, the filtering policy management unit 111 manages a policy(ies) for filtering the packets received by the switch. Examples of such a policy (filtering policy) include a policy for dropping abnormal packets such as a loop packet(s) from a host(s) and a policy for performing access control such as for dropping the packets from a certain host(s).

The table operation unit 114 refers to the policy(ies) managed by the filtering policy management unit 111, creates an entry(ies) set in the first table 23-1 in the switch 20, and transmits the entry(ies) to the switch 20 via the switch communication unit 107.

The processing determination unit 113 determines processing that is applied to the packets selected by the filtering entry(ies) generated by the table operation unit 114.

The other table operation unit 115 creates an entry(ies) in the second table 23-2 for instructing the switch 20 to perform the processing determined by the processing determination unit 113 and transmits the entry(ies) to the switch 20 via the switch communication unit 107.

The switch 20 in Fig. 6 has the configuration illustrated in Fig. 4, receives control messages relating to table operations from the control apparatus 100, and updates the tables 23-1 and 23-2. In addition, the switch 20 requests the control apparatus 100 to transmit an entry(ies) that is registered in the table 23-1/23-2 and performs an operation in accordance with a packet output instruction from the control apparatus 100. In addition, when receiving a packet, the switch 20 refers to the table 23-1/23-2, searches for an entry having a match condition(s) that matches the received packet, and performs an operation defined in the entry. For example, when receiving a packet that matches the match condition "A," the switch 20 refers to the second table and determines processing. In addition, for example, when receiving a packet that matches the match condition "B," the switch 20 performs an operation of dropping the packet.

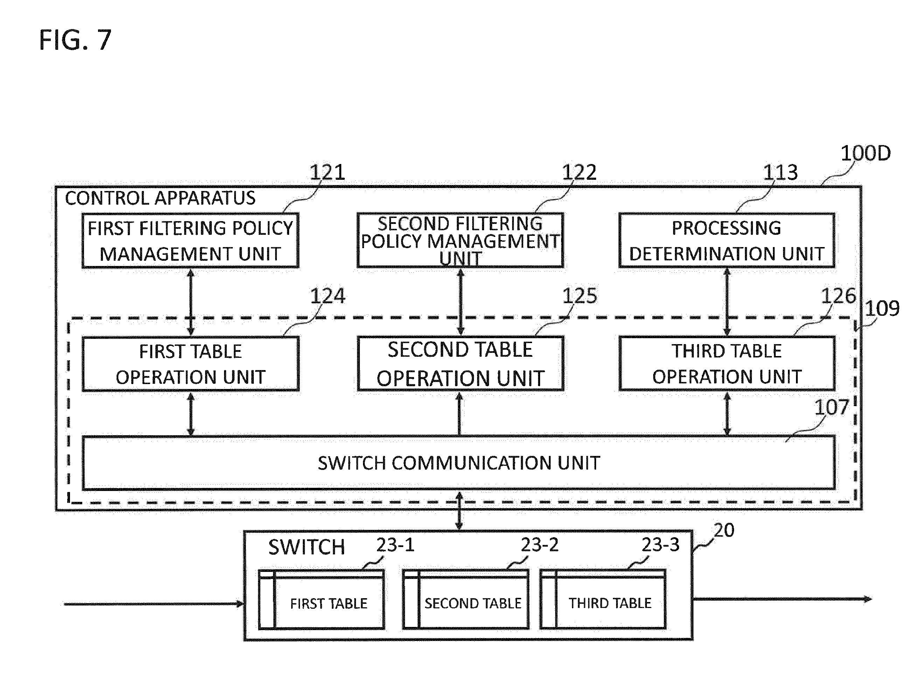

The switch 20 may be provided with a plurality of filtering tables. In this way, by using each of the tables, the filtering can be performed from different perspectives. A configuration in such case will hereinafter be described. Fig. 7 illustrates a configuration of a control apparatus 100D. The control apparatus 100D includes a first filtering policy management unit 121, a second filtering policy management unit 122, a processing determination unit 113, three table operation units 124 to 126, and a switch communication unit 107. The control apparatus 100D controls a switch 20 by using these units. In addition, the switch 20 includes three tables, which are first to third tables 23-1 to 23-3, respectively.

This configuration in Fig. 7 differs from that illustrated in Fig. 6 in that the switch 20 includes a plurality of filtering tables. In the example in Fig. 6, the first table 23-1 is used for filtering the received packets. However, in the configuration in Fig. 7, a plurality of filtering tables can be provided. For example, the first table 23-1 and the second table 23-2 are used as tables for performing filtering from different perspectives. In the example in Fig. 7, for example, a filtering policy(ies) defined by the first filtering policy management unit 121 is set in the first table 23-1. In addition, a second filtering policy(ies) defined by the second filtering policy management unit 122 is set in the second table 23-2. The first and second filtering policies may be filtering policies that are based on different perspectives.

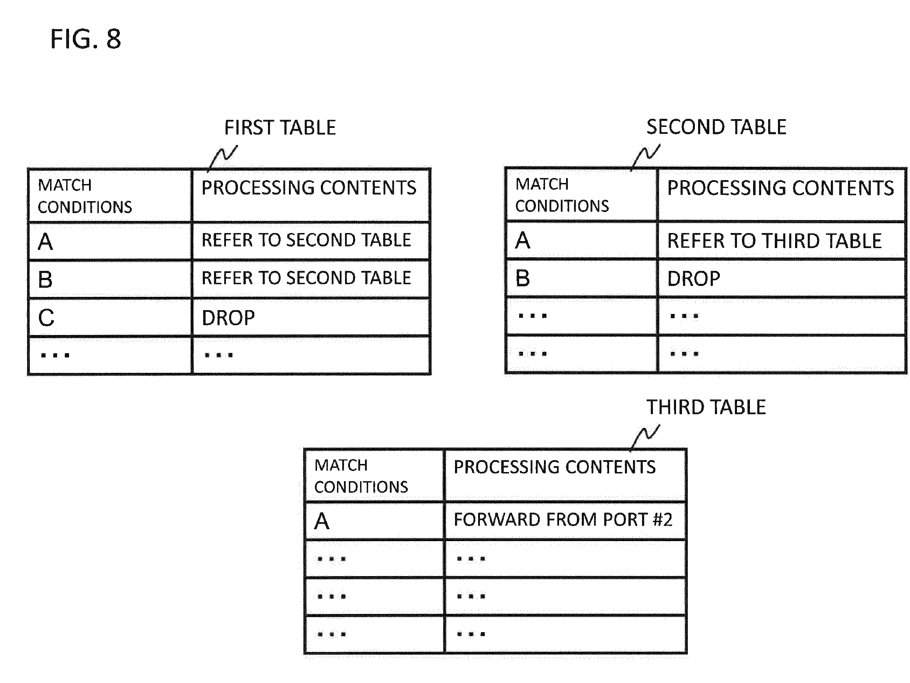

A method for setting the first to third tables will be described with reference to Fig. 8. In the first table, a policy for dropping the packets that match a match condition "C" is set. In the first table, there is also set an entry in which a match condition "A" is associated with a processing content for instructing the switch 20 to refer to the second table for the packets that match the match condition "A." Likewise, in the second table, a policy for dropping the packets that match the match condition "B" is set. In the third table, there is set an entry in which the match condition "A" is associated with a processing content for instructing the switch 20 to forward, from a port #2, the packets that have not been dropped by the first or second table.

Hereinafter, the configuration of the control apparatus 100D will be described with reference to Fig. 7. Compared with the configuration illustrated in Fig. 6, the control apparatus 100D includes the first filtering policy management unit 121 and the second filtering policy management unit 122 that correspond to the filtering policy management unit 111 in Fig. 6. The first filtering policy management unit 121 manages a filtering policy(ies) for creating an entry(ies) set in the first table 23-1 in the switch 20, for example. The second filtering policy management unit 122 manages a filtering policy(ies) for creating an entry(ies) set in the second table 23-2 in the switch 20, for example. As described above, the filtering policy(ies) set in the first table 23-1 and the filtering policy(ies) set in the second table 23-2 may be based on different perspectives. As in Fig. 6, the processing determination unit 113 determines processing applied to the packets selected by the filtering entry(ies) generated by the table operation units 114 and 115. In addition, as is the case with the table operation units 114 and 115 in Fig. 6, the number of table operation units included in the control apparatus 100D in Fig. 7 is not limited to 3.

As described above, according to the present exemplary embodiment, a switch is provided with a table(s) for filtering the received packets and a table(s) for processing the packets selected after the filtering. Thus, the packets received by the switch can be filtered by using a plurality of tables.

In addition, according to the present exemplary embodiment, the number of entries set in a switch(es) can be reduced, compared with a case in which both filtering of received packets and processing on received packets are performed with only one table.

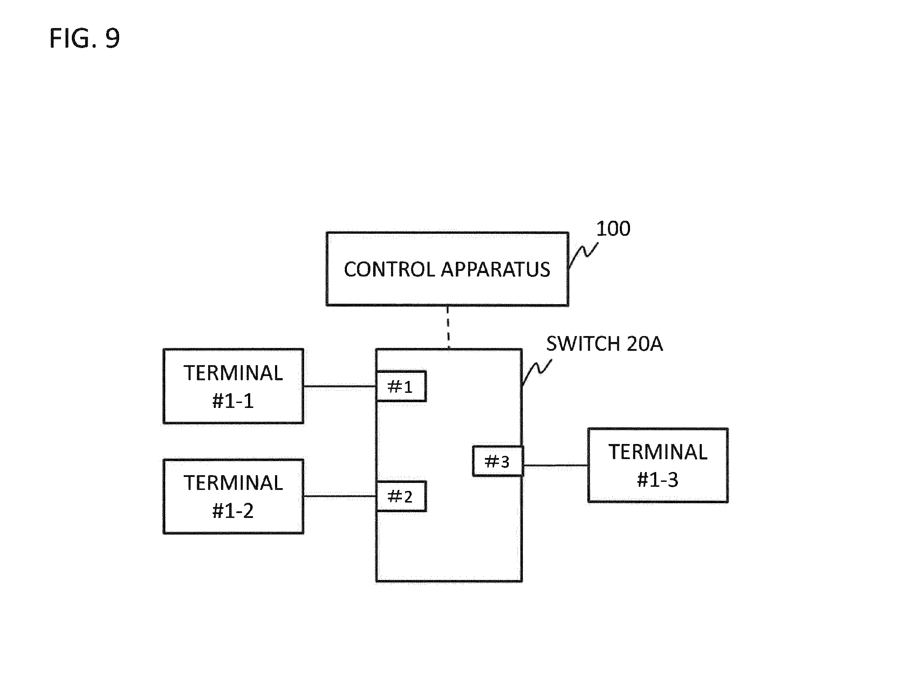

The following description will be made on the basis of a system illustrated in Fig. 9. In the system in Fig. 9, terminals #1-1 to #1-3 are connected to a switch 20A and belong to a terminal group "A." For example, the IP addresses of the terminals in the terminal group A are partly the same. In addition, the terminals #1-1 to #1-3 are connected to ports #1 to #3 of the switch 20A, respectively.

The following description will be made based on an example in which a filtering policy that permits only the communication from the terminal #1-1 and the terminal #1-3 and restricts (denies) the communication from the terminal #1-2 is applied to the switch 20A.

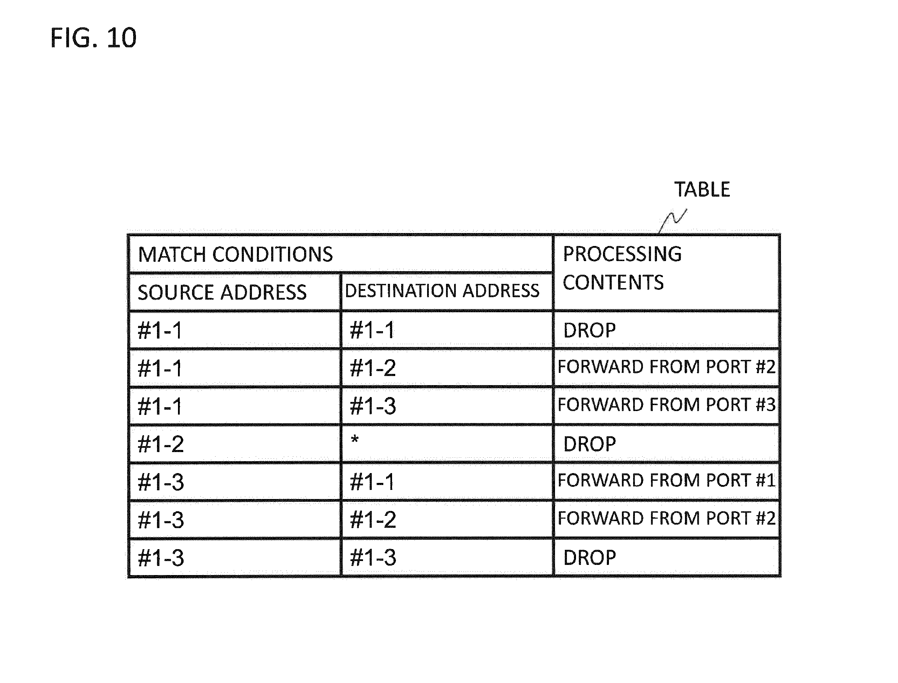

Fig. 10 illustrates an exemplary table configuration when this filtering policy is applied by using a single table. For example, as to the terminal #1-1, in the second and third entries, processing contents are set for forwarding the packets addressed to the terminals #1-2 and #1-3 as destinations from the respective ports. In addition, for example, in the first entry, a processing content is set for dropping the packets whose source and destination addresses are the same, so as to avoid occurrence of a loop.

In addition, a processing content is set for dropping the packets transmitted from the terminal #1-2 whose communication is restricted, regardless of the destination. In Fig. 10, "*" indicates a wildcard. For example, in the case of the match conditions in the fourth entry in Fig. 10, a source address of the terminal #1-2 is used as the match condition. No specific value is set as the destination address. Namely, as long as the source address of a received packet indicates an address of the terminal #1-2, the received packet matches this entry, regardless of the value as the destination.

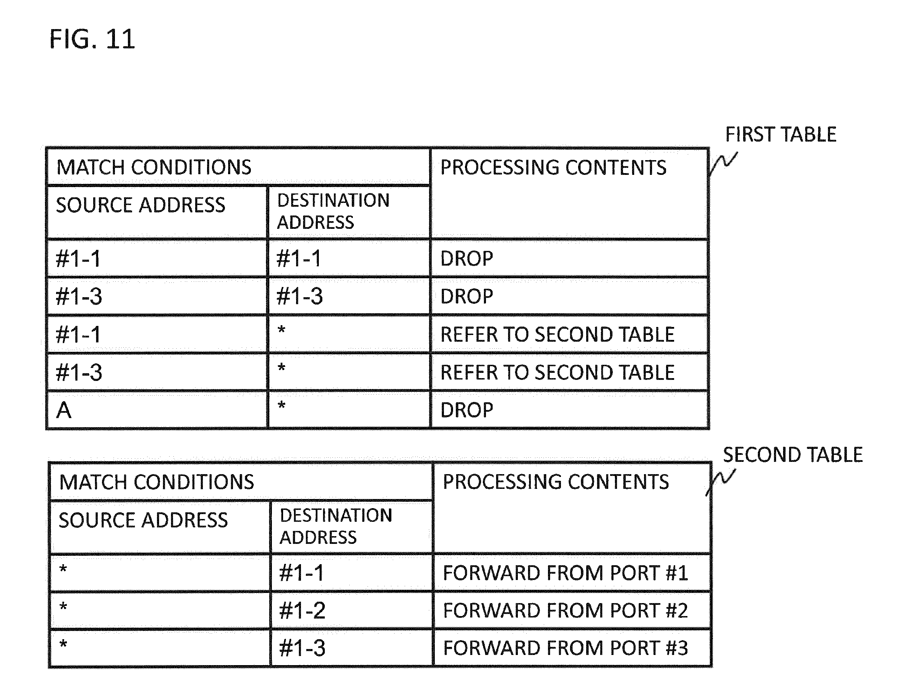

In contrast, Fig. 11 illustrates exemplary table configurations when the above filtering policy is applied by using two tables. First, the first and second entries in the first table are for dropping the packets that cause a loop as described above. In the third and fourth entries, there are set processing contents for instructing the switch to refer to the second table for the packets transmitted from the terminals #1-1 and #1-3 whose communication is permitted. In the fifth entry in the first table, there is set a processing content for dropping the packets transmitted from any one of the terminals in the group A including the terminals #1-1 to #1-3. While this match condition in the entry includes the terminals #1-1 and #1-3 whose communication is permitted, since the packets whose source address represents #1-1 and #1-3 match the match condition in one of the first to fourth entries in the first table, such packets are accordingly processed. Thus, the packets transmitted from the terminals #1-1 and #1-3 are not dropped by the fifth entry.

In addition, in the second table in Fig. 11, there are written processing contents for forwarding packets from a relevant port, depending on the destination address. In each entry in the second table, there is set processing for forwarding packets from a relevant port on the basis of the packet destination address, regardless of the source address.

By performing filtering with the first table as illustrated in Fig. 11, a processing content(s) can be set in the second table only in view of the destination address, regardless of the source address.

First, by using the first table, the packets transmitted from a certain terminal(s) are filtered out. The destinations of these packets are not checked. Namely, among the match conditions, a wildcard is set in the field for the destination address. Since filtering is performed by the first table, the packets processed by the second table are the packets selected after the filtering. In the above example, the packets transmitted from the terminal #1-2 whose access needs to be denied are not processed by the second table.

In the first table, since the packets transmitted from the certain terminal have already been filtered out, there is no need to check the source address in the second table. Thus, in the second table, it is possible to write a processing content(s) while using only the destination address as a match condition without specifying the source address. More specifically, as illustrated in the example in Fig. 11, "*" can be set as each source address. For example, in Fig. 10, in the case of the same destination address and different source addresses, the number of entries that are set corresponds to the number of source addresses. However, these entries can be compressed to one entry. For example, in Fig. 10, while both the destination addresses in the match conditions in the second and sixth entries indicate #1-2, these entries indicate different source addresses. However, in the second table in Fig. 11, these entries can be compressed to the second entry. Thus, by performing filtering with a plurality of tables as described in the present invention, the number of entries can be reduced.

Thus, the number of entries that are set in a table(s) according to the present exemplary embodiment is reduced compared with a case in which a single table is used. In addition, if the number of terminals is increased, since the number of combinations of a source and a destination is increased, the advantageous effect of reducing the number of entries according to the present exemplary embodiment becomes more significant.

In addition, according to the present exemplary embodiment, since the number of entries that are set in a table(s) of a switch(es) by the control apparatus can be reduced, the communication amount required when the control apparatus sets an entry(ies) in the switch(es) can also be reduced. Thus, according to the present exemplary embodiment, the load on the control apparatus can also be reduced.

### [Second exemplary embodiment]

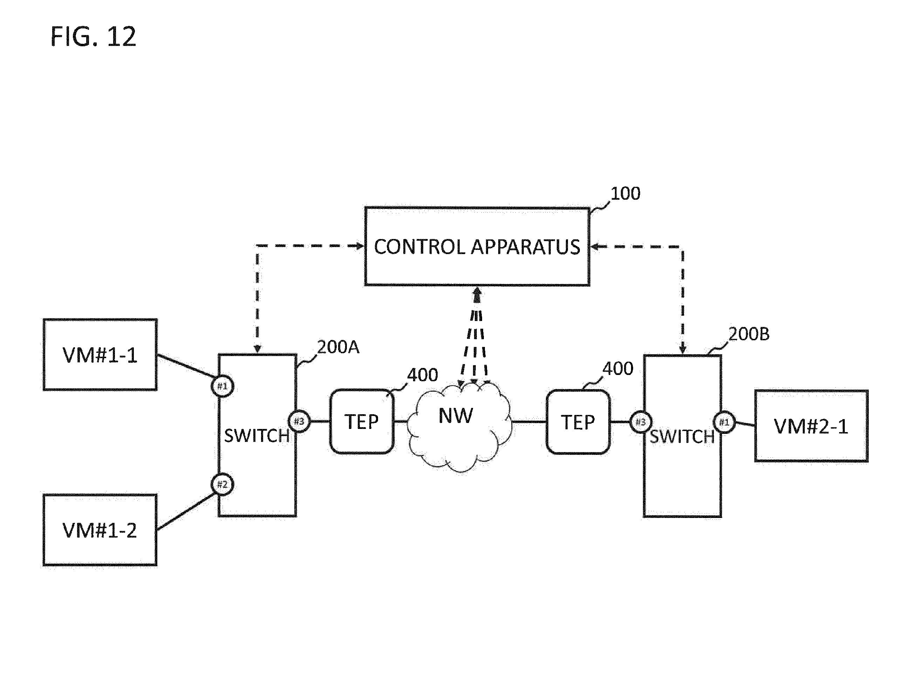

Next, a second exemplary embodiment of the present invention will be described in detail with reference to the drawings. Fig. 12 illustrates a configuration of a communication system according to the second exemplary embodiment of the present invention. As illustrated in Fig. 12, the communication system includes: a control apparatus 100 that controls a network (NW) and switches 200A and 200B; virtual machines (VMs) #1-1, #1-2, and #2-1 that communicate with each other via the switches 200A and 200B; and endpoints (TEPs) 400 of a virtual tunnel configured in the network (NW). The virtual tunnel is a path virtually or logically established on a network.

In the example in Fig. 12, the switch 200A has three ports #1 to #3, the ports #1 and #2 being connected to the VMs #1-1 and #1-2, respectively. In addition, the port #3 of the switch 200A is connected to the TEP 400. When receiving a packets from the VM #1-1 or #1-2, the switch 200A can transmit the packet to the switch 200B via the virtual tunnel. The switch 200B has two ports #1 and #2, the ports #1 and #2 being connected to the VM #2-1 and the other TEP 400, respectively. Each of the switches 200A and 200B may be a physical switch. Alternatively, each of the switches 200A and 200B may be a virtual switch that operates on a virtual server on which the VMs #1-1, #1-2, and #2-1 operate. Alternatively, each of the switches 200A and 200B may be a virtual switch that virtually operates on a terminal such as a mobile phone or a smartphone.

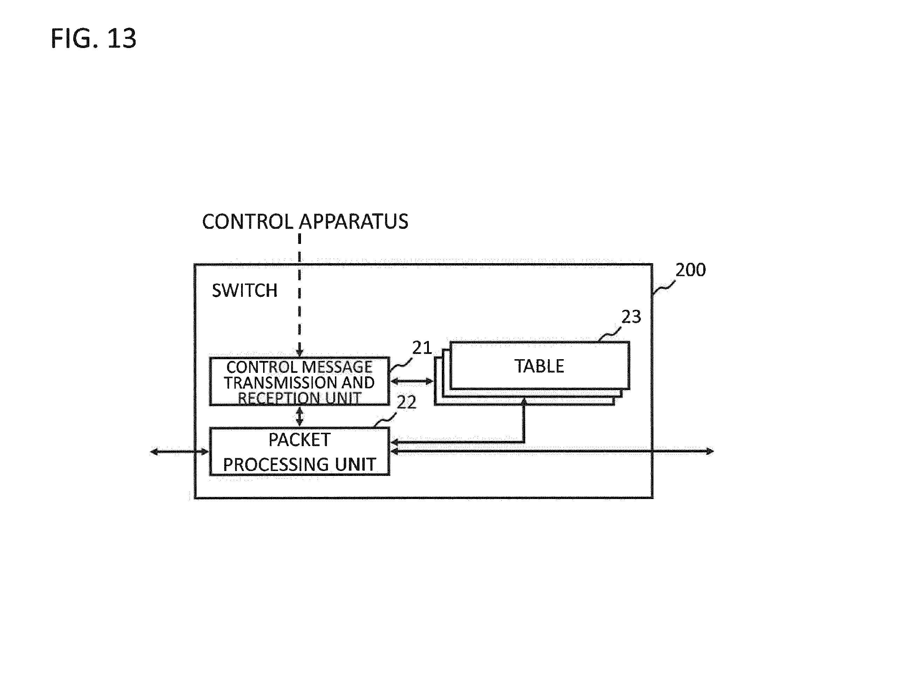

Fig. 13 illustrates a detailed configuration of the switches 200A and 200B (the switches 200A and 200B will be referred to as a "switch 200" unless these switches need to be distinguished from each other). As illustrated in Fig. 13, the switch 200 includes a control message transmission and reception unit 21, a packet processing unit 22, and tables 23.

The control message transmission and reception unit 21 receives control messages relating to operations of the tables 23 from the control apparatus100 and updates the table(s) 23. In addition, the control message transmission and reception unit 21 requests the control apparatus 100 to transmit an entry(ies) registered in the table(s) 23 and performs an operation in accordance with a packet output instruction from the control apparatus 100.

When receiving a packet, the packet processing unit 22 refers to the table(s) 23, searches for an entry having a match condition(s) that matches the received packet, and performs an operation (action) defined in the entry.

The tables 23 are configured by N tables, which are numbered from #0 to #N that indicate the order in which these tables are referred to. While the present exemplary embodiment will hereinafter be described assuming that the switch 200 has three tables #0 to #2, the number of tables is not limited. For example, each of the first to third tables described below may be provided in plurality.

For example, when receiving a packet, the packet processing unit 22 starts searching the table #0 for an entry having a match condition(s) that matches the received packet. As a result of the search, if the packet processing unit 22 determines that none of the tables include an entry having a match condition(s) that matches the received packet, the packet processing unit 22 requests the control message transmission and reception unit 21 to transmit an entry transmission request to the control apparatus 100. In one table 23, an entry having an operation (action) that defines querying the control apparatus 100 may be set. In contrast, if any of the tables #0 includes an entry having a match condition(s) that matches the received packet, the packet processing unit 22 performs an operation (action) defined in this entry. As an operation (action) of an individual entry, for example, it is possible to specify a number and instruct the switch 200 to refer to a table corresponding to the number (however, in order to avoid a loop, a table having a number that is smaller than that of the currently searched table cannot be specified). For example, such switch can be realized by an OpenFlow switch according to the specification in Non-Patent Literature 2.

Each of the TEPs 400 is an apparatus that encapsulates and decapsulates reception and transmission packets in accordance with a predetermined tunneling protocol. For example, a TEP 400 can be configured by a switch that can be controlled by the control apparatus 100. Examples of the predetermined tunneling protocol include GRE (Generic Routing Encapsulation), NVGRE (Network Virtualization using GRE), and IPsec (Security Architecture for Internet Protocol).

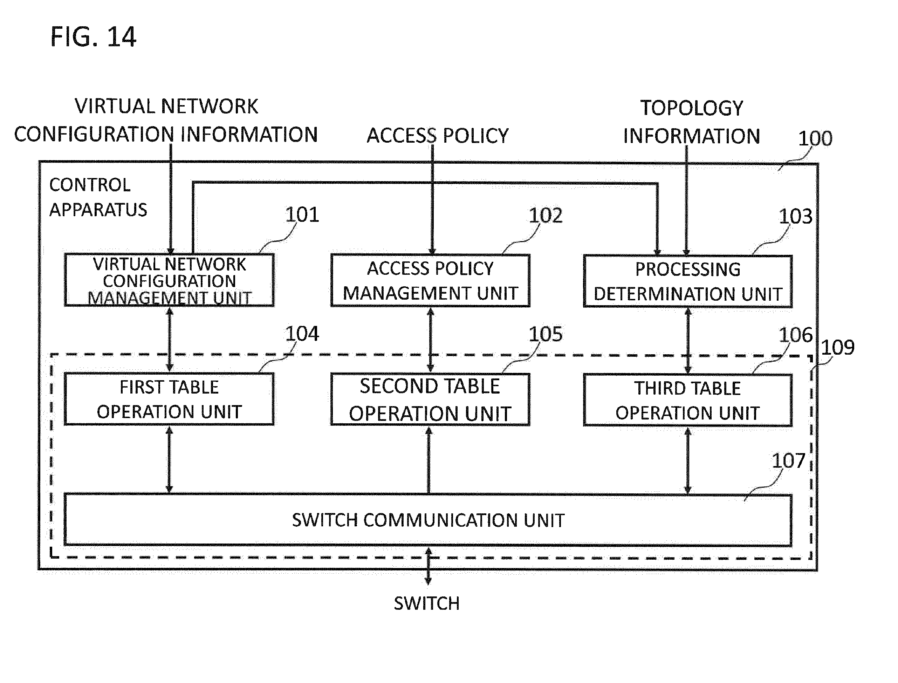

Fig. 14 illustrates a detailed configuration of the control apparatus 100. As illustrated in Fig. 14, the control apparatus 100 includes: a virtual network configuration management unit 101 that holds a configuration(s) of a virtual network(s); an access policy management unit 102 that holds an access policy(ies) in which a feature(s) of a communication(s) on which access control is performed and permission of the communication(s) are associated with each other; a processing determination unit 103 that determines processing performed by the switches 200A and 200B; and first to third table operation units 104 to 106, respectively. A portion 109 indicated by a dashed line in Fig. 14 corresponds to the switch control unit 19 in Fig. 1.

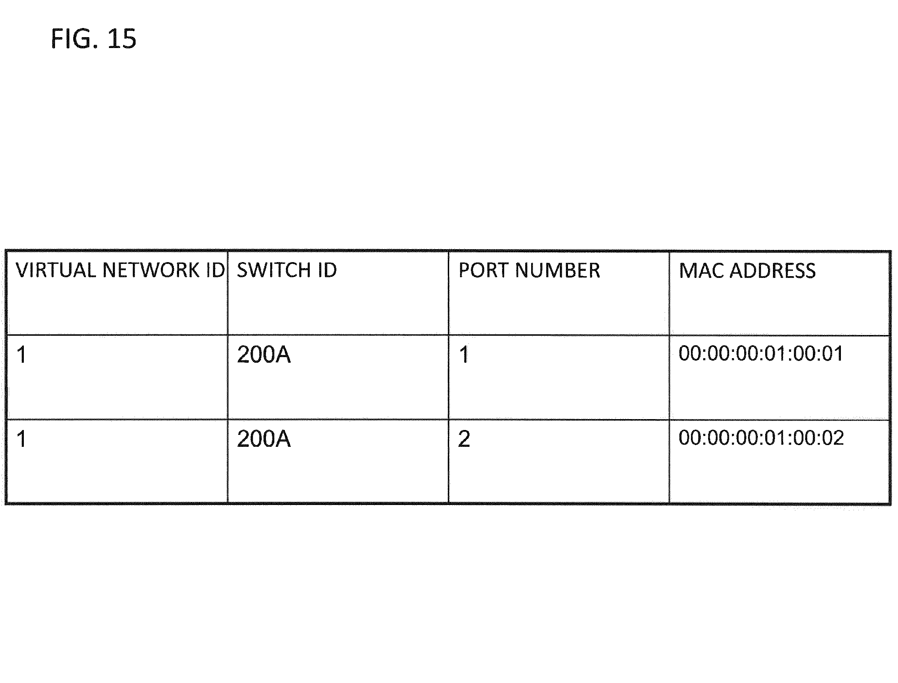

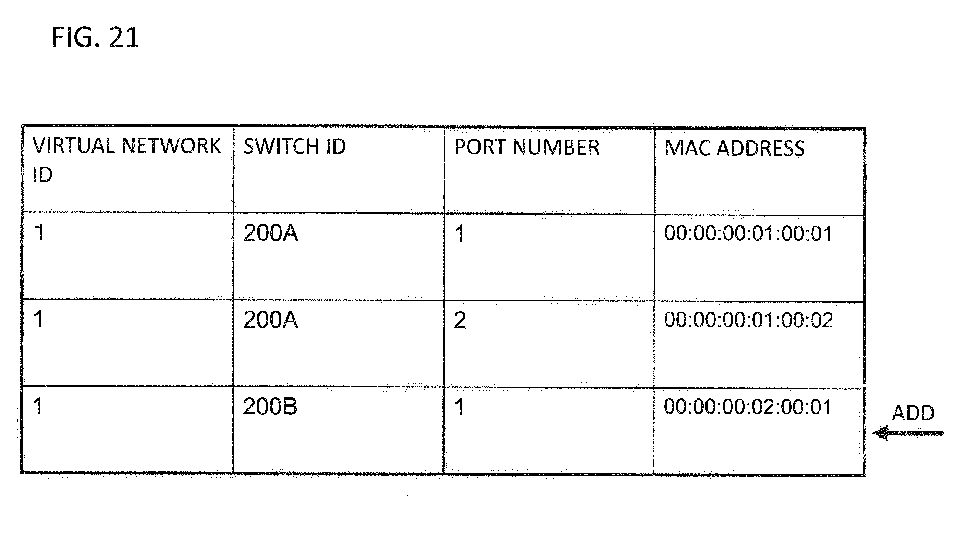

Fig. 15 illustrates exemplary virtual network configuration information held in the virtual network configuration management unit 101 in the control apparatus 100. As illustrated in Fig. 15, in each entry, a switch, a corresponding port number, and a MAC (Media Access Control) address given to the corresponding port in a virtual network are associated with each other. The two entries in Fig. 15 indicate that the ports #1 and #2 of the switch 200A in Fig. 12 belong to a virtual network whose virtual network ID is 1. In Fig. 15, information about the ports of the switch 200B in Fig. 12 is not registered. The reason will be described later with reference to Fig. 21. The virtual network configuration management unit 101 may hold information other than the information illustrated in Fig. 15.

The first table operation unit 104 generates an entry(ies) for selecting the packets that are processed by referring to the second table (table #1) or a subsequent table in the switch 200 from the virtual network configuration information held in the virtual network configuration management unit 101. For example, the first table operation unit 104 generates an entry for dropping loop packets indicating the same host in a virtual network as their source and destination. More specifically, the first table operation unit 104 generates an entry for instructing the switch 200 to drop the packets that are received via the port #1 or the #2 and that indicate the MAC address of the reception port as a destination (namely, abnormal packets addressed to its own address). Next, the first table operation unit 104 transmits the entry along with a control message instructing the switch 200 to store the entry in the first table thereof (table #0) to the switch 200.

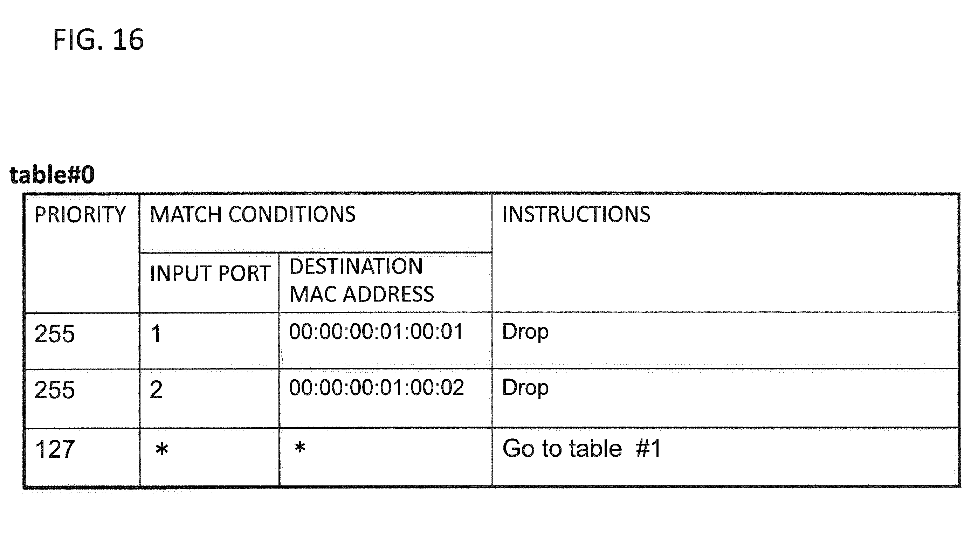

Fig. 16 illustrates exemplary entries which are generated from the virtual network configuration information illustrated in Fig. 15 by the first table operation unit 104 and which are set in the first table (table #0) in the switch 200A in Fig. 12. The first and second entries from the top in Fig. 16 are entries instructing the switch 200A to drop the packets that are received via the port #1 or the #2 and that indicate the MAC address of the reception port as a destination (namely, abnormal packets addressed to its own address). The third entry from the top in Fig. 16 is an entry which is determined to be hit when the switch 200A receives the packets other than those that match the first and second entries and which instructs the switch 200A to jump to (Go to) the table #1 (the symbol "*" in the following tables represents a wildcard). A priority field in Fig. 16 is for a priority level for each entry. For example, if a packet matches a match condition(s) in a plurality of entries, the switch 200A refers to this priority field to select an entry to be applied. In addition, in the example in Fig. 16, while the input port and the destination MAC address are used as the match conditions, other header information may be used. The entries illustrate in Fig. 16 are only examples. For example, an entry(ies) for capturing and dropping the packets having packet header information clearly indicating an abnormal value(s) or the packets that could be used for a DoS (Deny of Service) attack may be set.

The second table operation unit 105 generates an entry(ies) for performing filtering on the packets flowing through the virtual network, on the basis of an access policy(ies) held in the access policy management unit 102. Next, the second table operation unit 105 transmits the generated entry(ies) to the switch 200 along with a control message instructing the switch 200 to store the generated entry(ies) in the second table (table #1) of the switch 200.

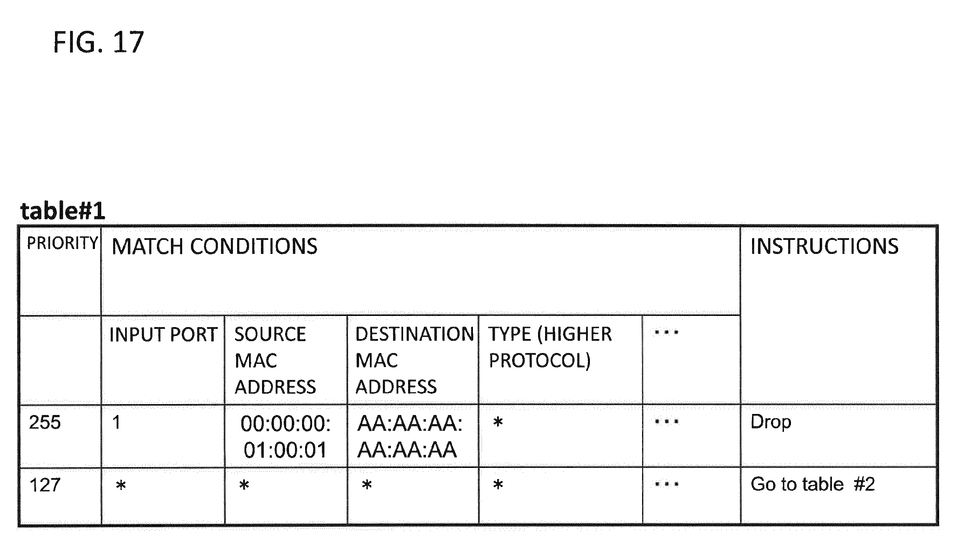

Fig. 17 illustrates exemplary entries set, in an initial state, in the second table (table #1) in the switch 200A in Fig. 12 by the second table operation unit 105. The first entry from the top in Fig. 17 is an entry for instructing the switch 200A to drop the packets whose source MAC address is 00:00:00:01:00:01 and whose destination MAC address is AA:AA:AA:AA:AA:AA, the packets received by the switch 20A via the port #1. Such an entry is generated on the basis of an access policy that prohibits access from a VM whose MAC address is 00:00:00:01:00:01 to a VM whose MAC address is AA:AA:AA:AA:AA:AA. In the second entry from the top in Fig. 17, each of the match condition fields indicates a wildcard "*." Thus, if the third or fourth entry in the first table is hit, the switch 200A also determines that this entry in the second table (table #1) is hit. Accordingly, the switch 200A jumps to (Go to) the table #2.

The processing determination unit 103 calculates an end-to-end path(s) on the basis of a topology of the virtual network including the switches 200A and 200B. In addition, the processing determination unit103 determines processing such as header rewriting, which needs to be performed by the switches 200A and 200B, as needed.

On the basis of the path information obtained from the processing determination unit 103, the third table operation unit 106 generates an entry(ies) for instructing the switch 200 to forward received packets or convert header information of received packets and transmits the entry(ies) to the switch 200 along with a control message instructing the switch 200 to store the entry(ies) in the third table (table #2) in the switch 200.

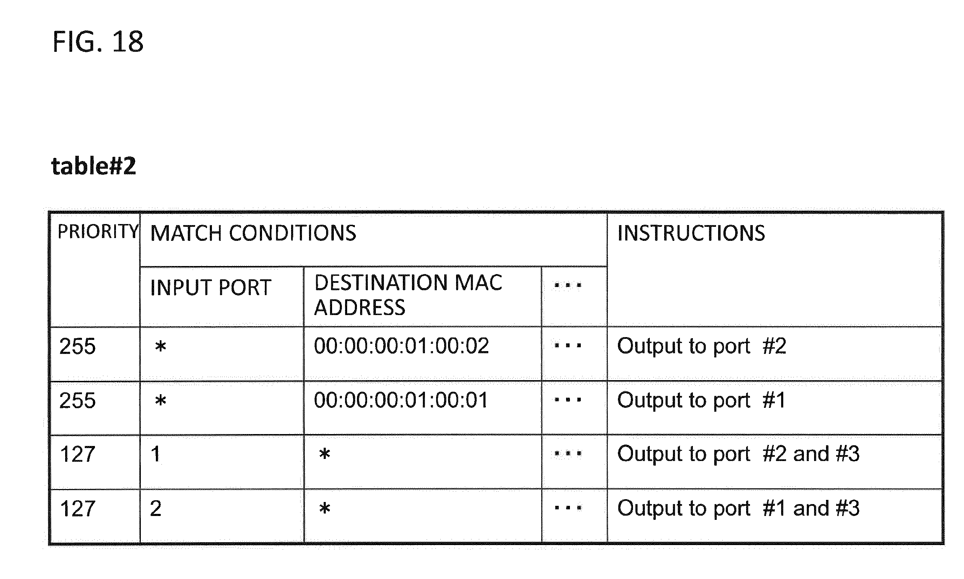

Fig. 18 illustrates exemplary entries set in the third table (table #2) in the switch 200A in Fig. 12 by the third table operation unit 106. The first entry from the top in Fig. 18 instructs the switch 200A to output the packets, in which the MAC address of the port #2 connected to the VM #1-2 is set as the destination address, from the port #2. Likewise, the second entry from the top in Fig. 18 instructs the switch 200A to output the packets, in which the MAC address of the port #1 connected to the VM #1-1 is set as the destination MAC address, from the port #1. With these two entries, the switch 200A enables communication between the VMs #1-1 and #1-2. The third and fourth entries from the top in Fig. 18 are entries for instructing the switch 200A to perform flooding. In flooding, among the packets determined, by the first table, to be processed by referring to the second table (table #1) or a subsequent table, the switch 200A transmits the packets that do not match any of the above two entries from the ports other than the reception port in the virtual network.

In the example in Fig. 14, for the purpose of illustration, the first table operation unit 104 to the third table operation unit 106 are arranged as separate processing units. However, the first table operation unit 104 to the third table operation unit 106 may be integrated as appropriate, as long as each of the filtering tables (corresponding to the first table (table #0) and the second table (table #1)) and the table for determining processing to be applied to packets (corresponding to the third table (table #2)) is configured to be updatable. For example, in place of the first table operation unit 104 to the third table operation unit 106, a single table operation unit that performs all the processing of the first table operation unit 104 to the third table operation unit 106 may be arranged.

Each unit (processing means) in the control apparatus illustrated in Fig. 14 can be realized by a computer program that executes corresponding processing described above by using a storage means included in a computer constituting the control apparatus and hardware of the computer.

Next, an operation of the control apparatus 100 will be described with reference to the drawings. First, an operation performed when an access policy is added to the access policy management unit 102 will be described.

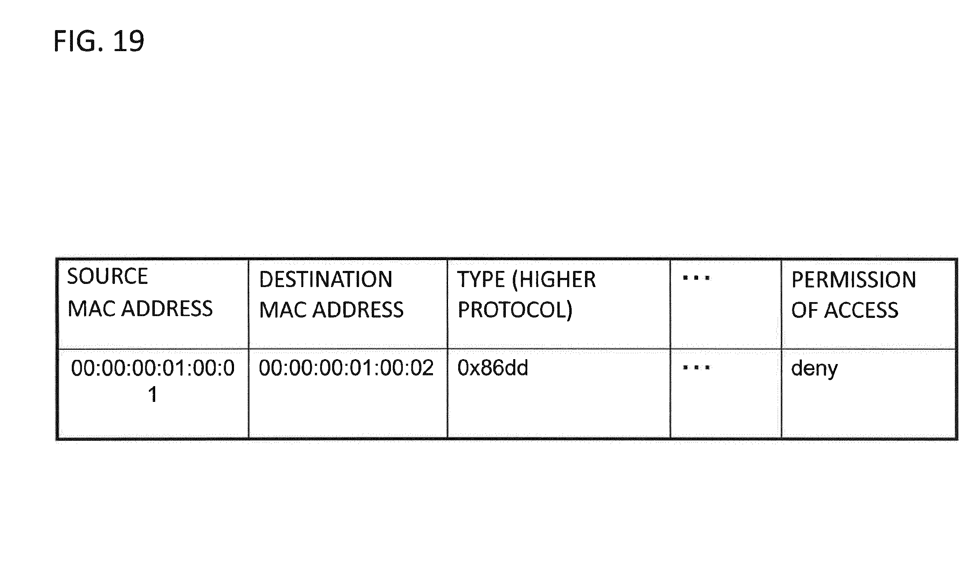

Fig. 19 illustrates an exemplary access policy added to the access policy management unit 102 in the control apparatus 100. In the example in Fig. 19, there is set an access policy for prohibiting IPv6 (type = 0x86dd) communication from the VM #1-1 to the VM #1-2 by specifying the MAC addresses of the corresponding connection ports. The example in Fig. 19 is only an example. For example, it is possible to set an access policy for permitting only the packets from a certain VM to a certain VM or only the packets relating to a certain service(s).

On the basis of the above access policy, the second table operation unit 105 generates an entry(ies) for filtering the packets flowing through the virtual network and transmits the entry(ies) along with a control message instructing the switch 200 to store the entry(ies) in the second table (table #1) in the switch 200.

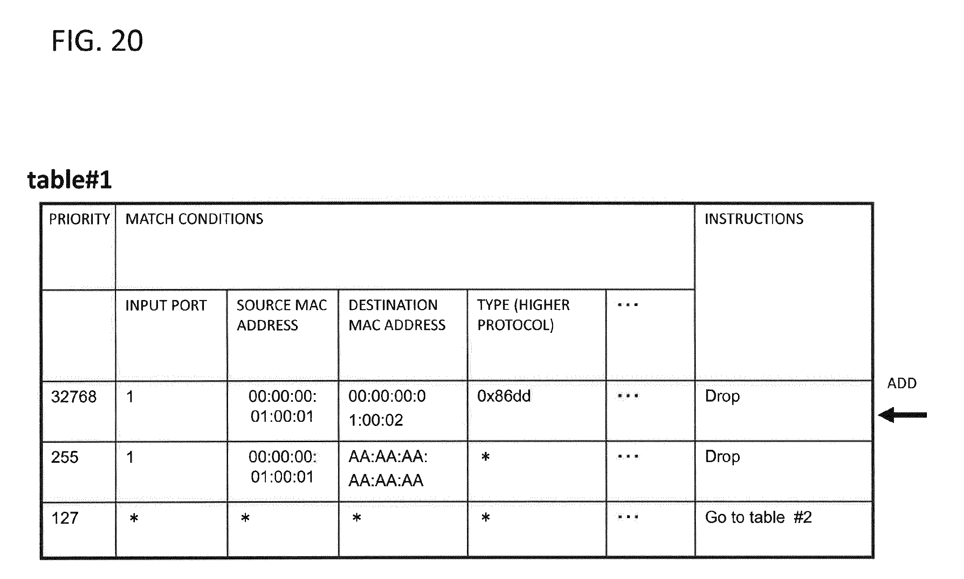

Fig. 20 illustrates exemplary entries that are generated from the access policy in Fig. 19 by the second table operation unit 105 and that are added to the second table (table #1) in the switch 200A in Fig. 12. In the example in Fig. 20, an entry for instructing the switch 200A to drop packets is added. More specifically, in accordance with this entry, among the packets determined, by the first table, to be processed by referring to the second table (table #1) or a subsequent table in the switch 200, when the switch 200A receives packets via the port #1, the packets indicating the port connected to the VM #1-1 as the source MAC address, the port connected to the VM #1-2 as the destination MAC address, and IPv6 as the higher protocol, the switch 200A drops the packets. While dropping is specified as an action in the example in Fig. 20, alternatively, an entry for instructing the switch 200A to rewrite header information or redirect the packets to a certain destination may be set depending on the access policy, for example.

Next, an operation of the control apparatus performed when the virtual network configuration information is updated will be described. The following description will be made based on an exemplary operation in which the VM #2-1 in Fig. 12 is established and connected to the same virtual network as that of the VMs #1-1 and #1-2 via the switch 200B.

Fig. 21 illustrates the virtual network configuration information after the port #1 of the switch 200B is added thereto. As illustrated in Fig. 21, an entry in which an ID of the switch 200B, a port number #1 connected to the VM #2-1, and a MAC address given to this port are associated with each other is added as the third entry.

When detecting change of the virtual network configuration information, the first table operation unit 104 starts operating the first table (table #0) in the switch 200 on the basis of the changed virtual network configuration information.

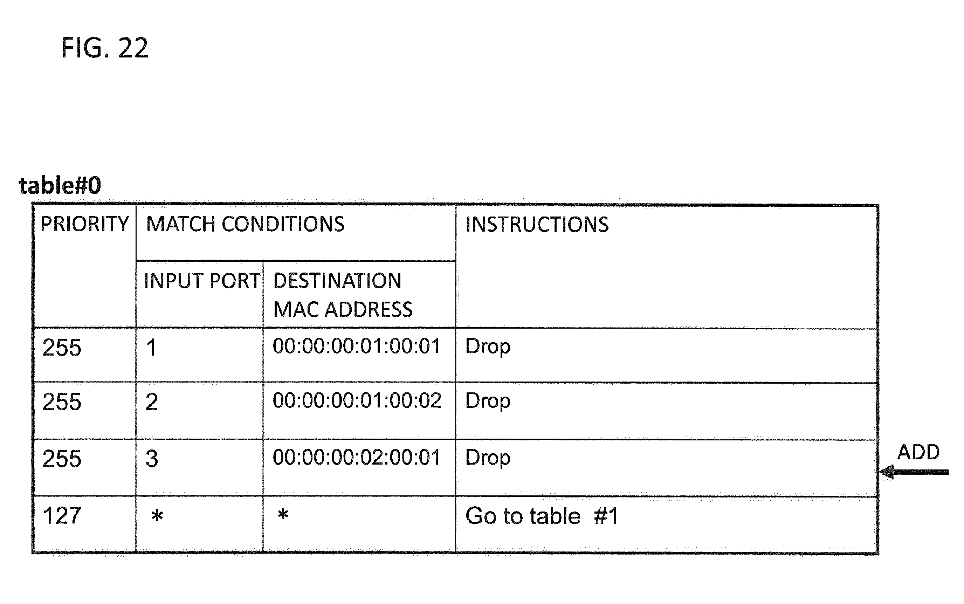

Fig. 22 illustrates the first table (table #0) in the switch 200A operated by the first table operation unit 104 on the basis of the virtual network configuration information illustrated in Fig. 21. In the example in Fig. 22, there has been added an entry for instructing the switch 200A to drop the packets that are received via the port number #3 of the switch 200A and that are addressed to the MAC address of this port (namely, abnormal packets addressed to its own address) (see the third entry from the top in Fig. 22).

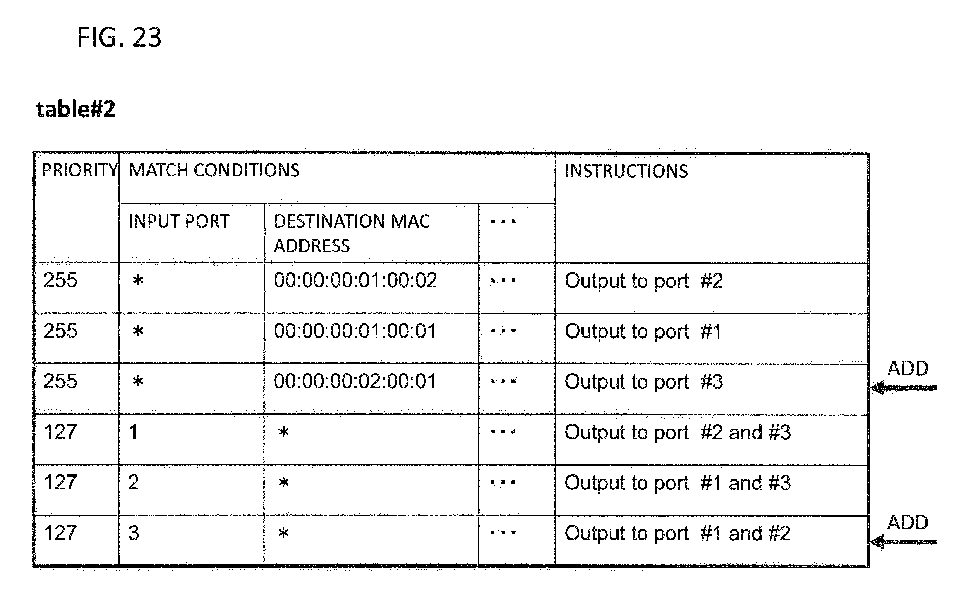

Fig. 23 illustrates entries in the third table (table #2) in the switch 200A operated by the third table operation unit 106 on the basis of the virtual network configuration information illustrated in Fig. 21. In the example in Fig. 23, there has been added an entry for instructing the switch 200A to output, among the packets determined, by the above first and second table, to be processed by referring to the third table (table #2) or a subsequent table in the switch 200, the packets indicating the MAC address of the port #1 of the switch 200B connected to the VM #2-1 as the destination address from the port #3 of the switch 200A (see the third entry from the top in Fig. 23). Consequently, packet transmission from the VMs #1-1 and #1-2 to the VM #2-1 is enabled. In addition, in the example in Fig. 23, the table #2 also includes an entry for instructing the switch 200A to perform flooding in which the switch 200A transmits the packets that do not match the above three entries from the ports other than the reception port (see the sixth entry from the top in Fig. 23).

The switch 200B is also provided with entries for instructing the switch 200B to filter the above abnormal packets and the like and forward the selected packets to an appropriate destination(s) on the switch 200A side, depending on the destination MAC address.

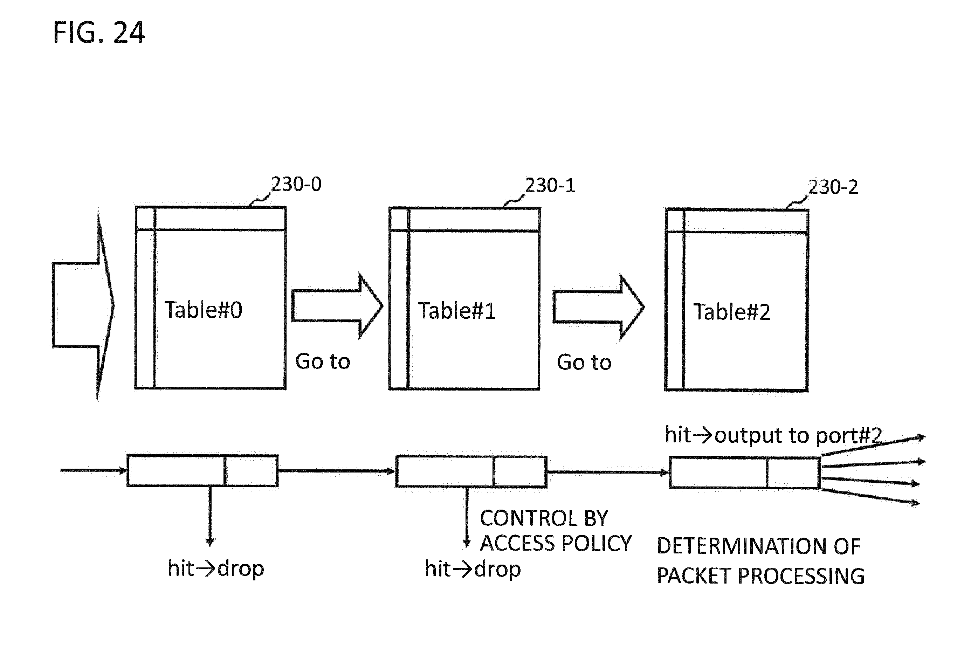

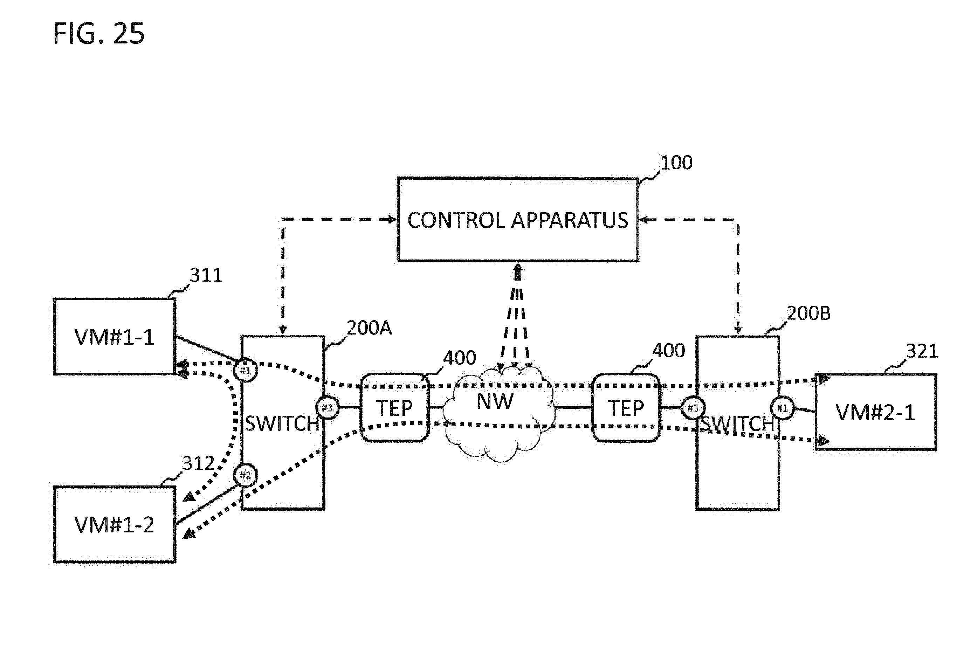

As a result, the first table (Table #0) to the third table (Table #2) are set in the switch 200, as illustrated in Fig. 24. When a switch 200 receives an appropriate packet, the switch 200 searches the second table (Table#1) 230-1 after the first table (Table#0) 230-0. As a result of the searching the second table (Table#1) 230-1, if an entry that embodies a predetermined access policy is hit, the switch 200 performs access control depending on the content (Drop, etc. if an entry is hit). The switch 200 searches the third table (Table#2) 230-2 and finally outputs the packet from a port connected to the corresponding virtual network (see Fig. 25).

As a basic operation of the switch 200, there are cases in which the switch 200 requests the control apparatus 100 to transmit an entry for a received packet if the switch 200 does not include any entry having a match condition(s) that matches the received packet. There are also cases in which an entry for instructing the switch 200 to request the control apparatus 100 to transmit an entry is set in the switch 200 with a low priority level. In such cases, among the received packets, the switch 200 drops the abnormal packets in accordance with higher priority level entries in the first table (Table#0). Among the remaining received packets, the switch 200 transmits an entry transmission request to the control apparatus 100 only for the packets that do not hit any entries in the second table (Table #1) and third table (Table #2). Thus, the switch 200 does not need to request transmission of entries for processing the abnormal packets, and the control apparatus 100 does not need to respond to such requests. Thus, since the amount of communication among the switches 200 and the control apparatus 100 such as entry transmission requests from the switches 200 and responses from the control apparatus 100 in response to such requests is reduced, the load on the control apparatus 100 and the switches 200 is reduced.

As described above, according to the present exemplary embodiment, an individual switch is provided with a table(s) for filtering the received packets and a table(s) for processing the packets selected after the filtering. Thus, as in the first exemplary embodiment, the packets received by the switch can be filtered by using a plurality of tables.

In addition, according to the present exemplary embodiment, as in the first exemplary embodiment, the number of entries that are set in a switch(es) can be reduced compared with a case in which both filtering of received packets and processing on received packet are performed by using a single table.

According to the present exemplary embodiment, the switch 200 uses the three tables of the first table (Table #0) 230-0 to the third table (Table #2) 230-2 and uses two (first table (Table #0) 230-0 and the second table (Table #1) 230-1) of the tables for filtering. However, the number of tables is not particularly limited, as long as the switch uses a plurality of tables. For example, the first table operation unit 104 and the second table operation unit 105 may operate one table (filtering) table in the switch 200 and the third table operation unit 106 may operate another table (for determining processing) in the switch 200. Likewise, for example, the first table operation unit 104 to the third table operation unit 106 may operate each of a plurality of tables in the switch 200.

### [Third exemplary embodiment]

Next, a third exemplary embodiment will be described. According to the third exemplary embodiment, in addition to filtering of the received packets, processing performed by a certain host (VM) can be set in an upstream table of a plurality of tables. For example, if a virtual network ID "1" needs to be given to the VM #1-1, for the VM #1-1, processing for giving the virtual network ID "1" can be set in an upstream table, in addition to processing for referring to the next table. The following description will be made based on an example in which the switch determines a virtual network in an upstream table and information about the determination result is used as a match condition. Since the third exemplary embodiment of the present invention can be realized by a configuration substantially the same as that of the second exemplary embodiment of the present invention, the third exemplary embodiment will be described with a focus on the difference from the second exemplary embodiment.

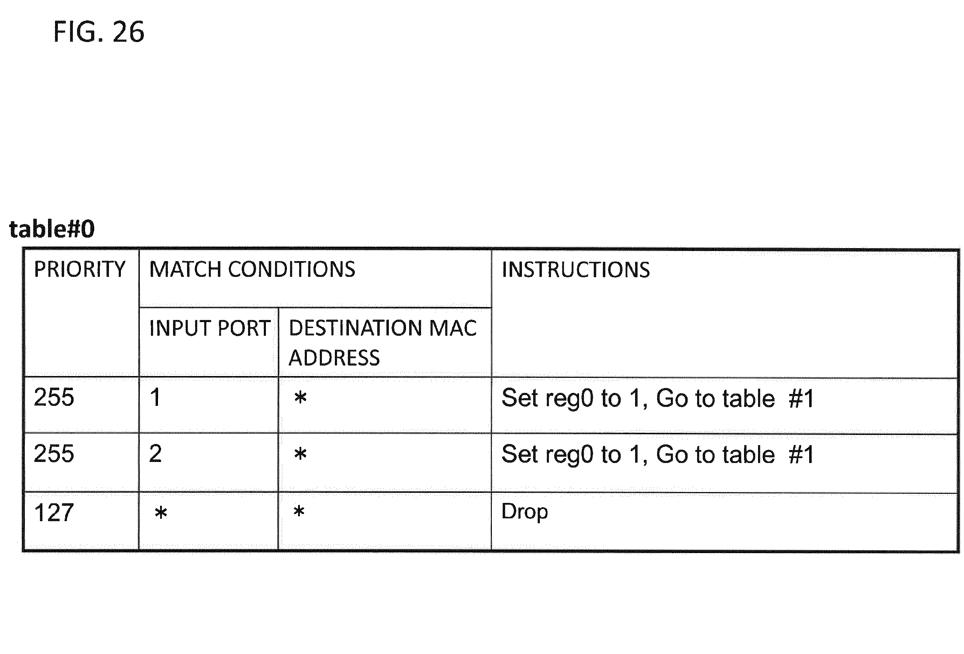

Fig. 26 illustrates exemplary entries that are generated from the virtual network configuration information in Fig. 15 by the first table operation unit 104 according to the third exemplary embodiment of the present invention and that are set in the first table (table #0) in the switch 200A in Fig. 12. This first table (table #0) differs from that according to the first exemplary embodiment and the second exemplary embodiment in that the first table (table #0) includes processing contents for setting an ID of a virtual network to which a received packet belongs and referring to the next table #1. For example, in each of the first and second entries from the top in Fig. 26, there is set an action for instructing a switch to, when the switch receives a packet via the input port #1 or #2, set the virtual network ID "1" in a meta-information storage register (reg0) used as a virtual network ID storage region and jump to (Go to) the table #1. The third entry from the top in Fig. 26 is an entry for instructing the switch to drop the received packets other than the above packets (namely, the packets that do not belong to any of the virtual networks). When processing a packet by referring to an individual table, if the packet processing unit 22 refers to the meta-information storage register, the packet processing unit 22 can recognize the virtual network ID to which the currently processed packet belongs.

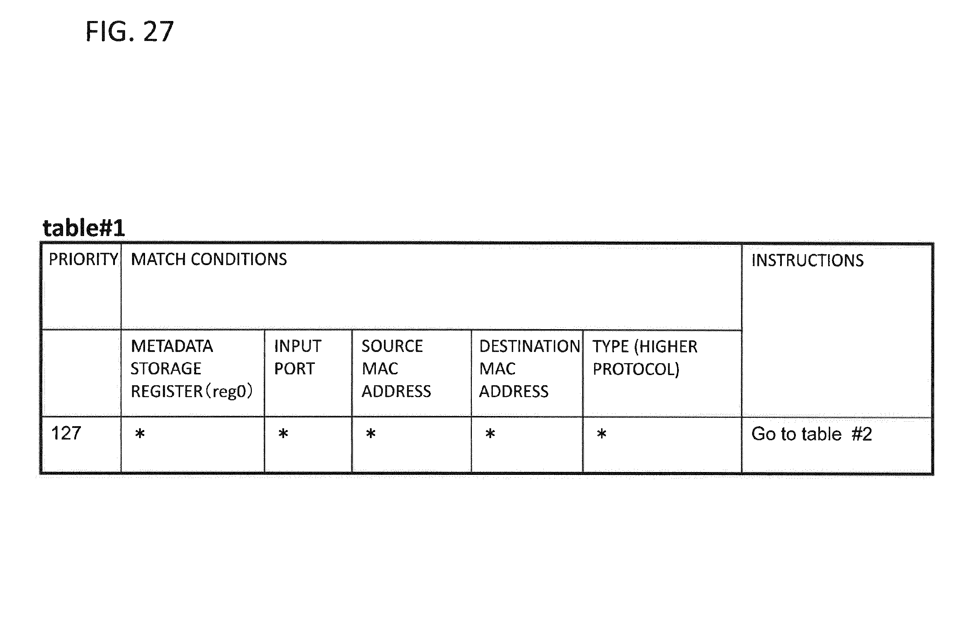

Fig. 27 illustrates an exemplary entry that is set in the second table (table #1) in the switch 200A in Fig. 12 by the second table operation unit 105 according to the third exemplary embodiment of the present invention. The entry differs from the entries illustrated in Fig. 17 in that the above meta-information storage register (reg0) can be set as a match condition.

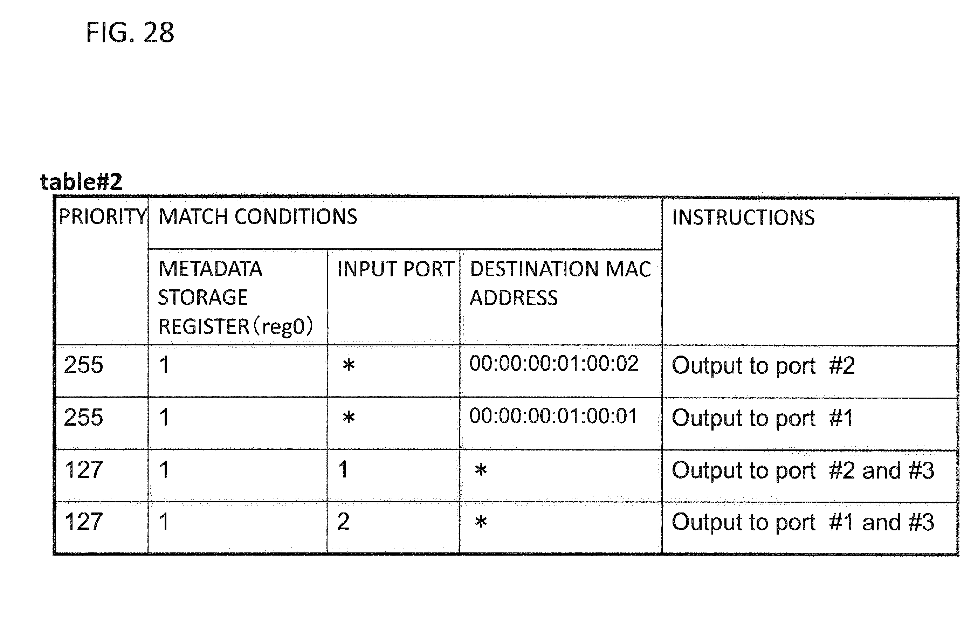

Fig. 28 illustrates exemplary entries that are set in the third table (table #2) in the switch 200A in Fig. 12 by the third table operation unit 106 according to the third exemplary embodiment of the present invention. The entries differ from the entries illustrated in Fig. 18 in that the above meta-information storage register (reg0) can be set as a match condition. More specifically, the first entry from the top in Fig. 28 instructs the switch 200A to output, among the packets determined, by the first table. to belong to the virtual network ID "1" (reg0 = 1), packets indicating the MAC address of the port #2 connected to the VM #1-2 as the destination address from the port #2. Likewise, the second entry from the top in Fig. 28 instructs the switch 200A to output, among the packets determined, by the first table, to belong to the virtual network ID "1" (reg0 = 1), packets indicating the MAC address of the port #1 connected to the VM #1-1 as the destination MAC address from the port #1. With these two entries, the switch 200A enables communication between the VMs #1-1 and #1-2. The third and fourth entries from the top in Fig. 28 are entries for instructing the switch 200A to perform flooding. In flooding, among the packets determined, by the first table, to belong to the virtual network ID "1" (reg0 = 1), the switch 200A transmits the packets that do not match any of the above two entries from the ports other than the reception port in the virtual network.

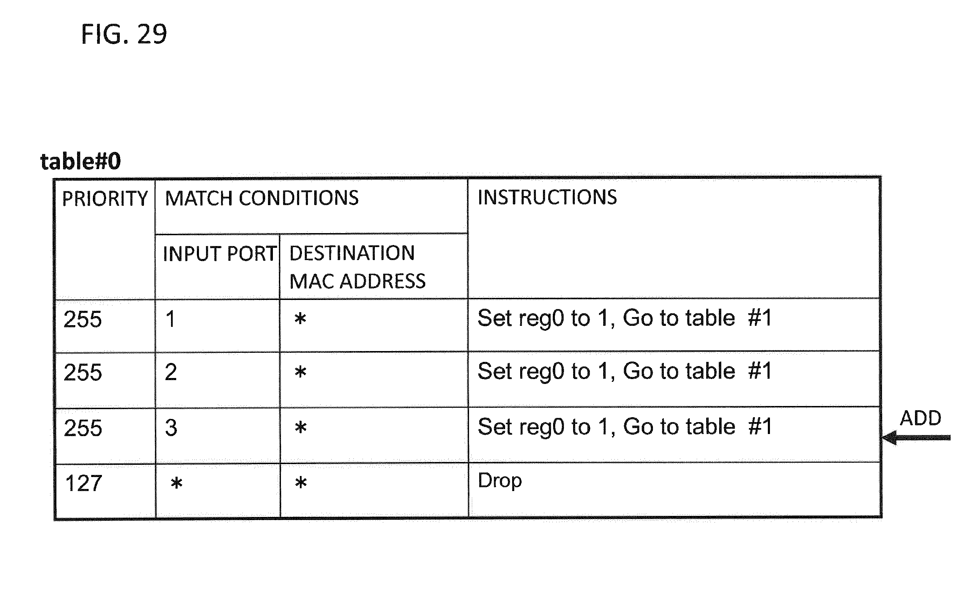

Fig. 29 illustrates the first table (table #0) in the switch 200A operated by the first table operation unit 104 on the basis of the virtual network configuration information illustrated in Fig. 21. In the example in Fig. 29, there is added an entry including actions for instructing the switch to set, when receiving a packet via the input port #3, the virtual network ID "1" in the meta-information storage register (reg0) and jump to (Go to) the table #1 (see the third entry from the top in Fig. 29).

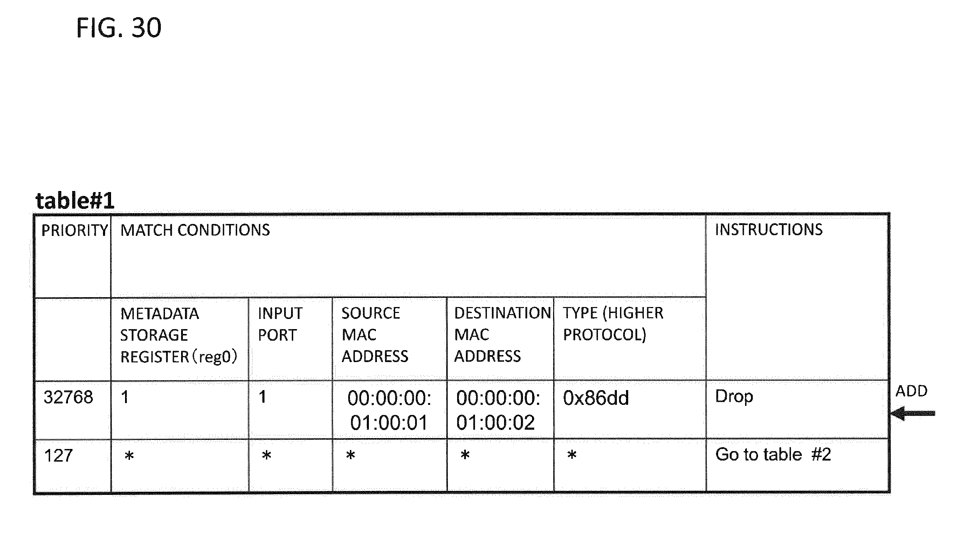

Fig. 30 illustrates exemplary entries that are generated from the access policy illustrated in Fig. 19 and added to the second table (table #1) in the switch 200A in Fig. 12. These entries differ from the entries in Fig. 11 in that the meta-information storage register (reg0=1) is set as a match condition.

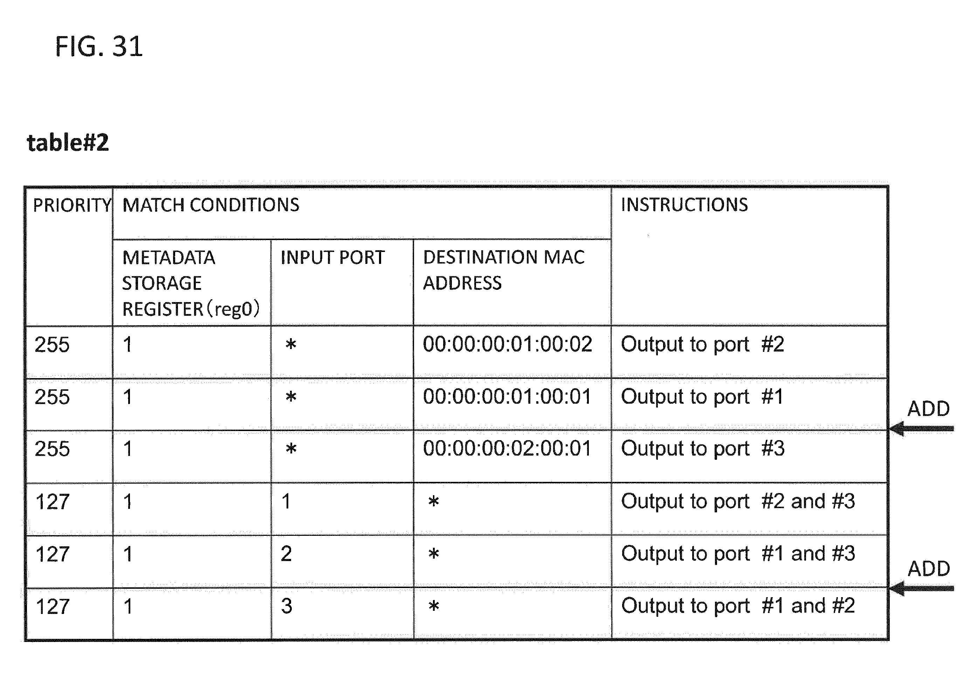

Fig. 31 illustrates the third table (table #2) in the switch 200A operated by the third table operation unit 106 on the basis of the virtual network configuration information illustrated in Fig. 21. The entries differ from the entries illustrated in Fig. 23 in that the meta-information storage register (reg0=1) is set as a match condition.

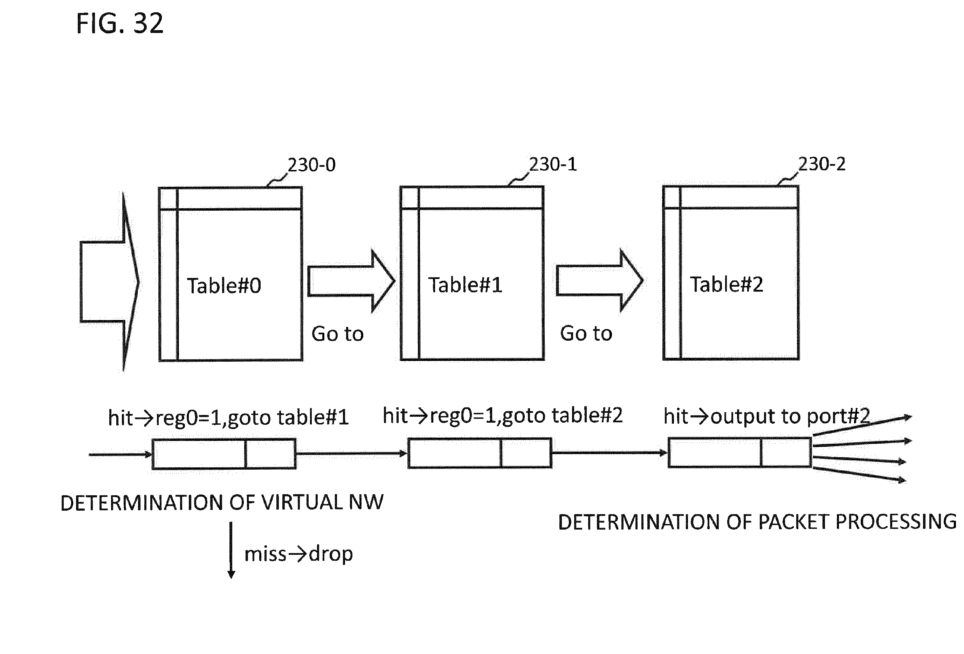

As a result, as illustrated in Fig. 32, the first table (Table#0) to the third table (Table #2) are set in the switch 200. When a switch 200 receives a packet that belongs to an appropriate virtual network, the switch 200 sets, in accordance with a matching entry in the first table (Table #0) 230-0, an ID of the virtual network in the metadata (reg0) and searches the second table (Table #1) 230-1 and the third table (Table #2) 230-2. Finally, as in the second exemplary embodiment, the switch 200 outputs the packet from a port connected to the virtual network (see Fig. 32).

As described above, according to the present exemplary embodiment, the switch is provided with a table(s) for filtering received packets and a table(s) for processing the packets selected after the filtering. Thus, as in the first and second exemplary embodiments, the packets received by the switch can be filtered by using a plurality of tables.

In addition, according to the present exemplary embodiment, as in the first and second exemplary embodiments, the number of entries that are set in a switch(es) can be reduced compared with a case in which both filtering of received packets and processing on received packets are performed by using one table.

In addition, according to the third exemplary embodiment, processing performed by a certain host (VM) can be set in addition to processing for filtering of the received packets in an upstream table among the plurality of tables.

In addition, the present exemplary embodiment has been described on the basis of an example in which the virtual network ID "1" is allocated when the virtual network is determined in the first table (Table #0). However, another virtual network ID, (for example, the meta-information storage register (reg0=2)), may be allocated for communication that belongs to another virtual network. Next, by using this virtual network ID as a match condition in the second table (Table #1) and the third table (Table #2), different processing may be applied depending on the virtual network. For example, by using the second table (Table #1), depending on the virtual network ID, the switch can apply a different access policy and perform further filtering. Likewise, by using the third table (Table #2), the switch can forward packets in accordance with a path(s), depending on the configuration of the virtual network ID.

While the exemplary embodiments of the present invention have thus been described, the present invention is not limited thereto. Further variations, substitutions, or adjustments can be made without departing from the basic technical concept of the present invention. For example, the configurations of the networks and the number of each type of elements used in the above exemplary embodiments are not limited.

In addition, for example, in the examples in Figs. 6, 7, and 14, the control apparatus 100, 100C, and 100D includes the processing determination unit 103. However, the processing determination unit 103 may be arranged in another apparatus. In addition, in place of the processing determination unit 103, a storage unit that stores previously calculated path information or an entry(ies) to be set in a switch(es) may be arranged.

The above third exemplary embodiment has been described on the basis of an example in which metadata (reg0) in Non-Patent Literature 2 is used as a region for storing information (virtual network ID) for determining a virtual network to which a packet that matches a match condition(s) belongs. However, the determined virtual network ID may be written in a predetermined packet header region (for example, VLAN ID).

In addition, the exemplary embodiments have been described assuming that the processing determination unit 103 calculates an end-to-end path(s) only on the basis of the topology information. However, the processing determination unit 103 may perform path calculation in view of the virtual network configuration information or an access policy(ies).

Finally, suitable modes of the present invention will be summarized.

### [Mode 1]

### (See the control apparatus according to the above first aspect)

### [Mode 2]

The control apparatus according to mode 1;
wherein the control apparatus sets at least one of the first and second entries including a condition(s) compared with the received packets in the switch(es); and
wherein at least one of the first and second entries includes a condition(s) compared with a plurality of received packets as a group.

### [Mode 3]

The control apparatus according to mode 1 or 2;
wherein the control apparatus sets at least one of the first and second entries including a condition(s) compared with the received packets in the switch(es); and
wherein at least one of the first and second entries includes a condition(s) set as a wildcard(s).

### [Mode 4]

The control apparatus according to any one of modes 1 to 3;
wherein the second entry(ies) includes a condition(s) in which information that corresponds to a source address of a received packet is set as a wildcard.

### [Mode 5]

The control apparatus according to any one of modes 1 to 4, comprising:
a first table operation unit that sets an entry(ies) for sorting out a packet(s) that is processed by referring to the second table(s) from a packet(s) that is not processed by referring to the second table(s) in the first table(s); and
a second table operation unit that sets, on the basis of a packet(s) selected by the first table(s), an entry(ies) that defines processing applied to the selected packet(s) in the second table(s).

### [Mode 6]

The control apparatus according to mode 5;
wherein the first table operation unit sets, on the basis of configuration information about a virtual network including the switch(es), an entry(ies) for selecting a packet(s) that belongs to the virtual network in the first table(s); and
wherein the second table operation unit sets an entry(ies) that defines processing applied to a packet(s) that belongs to the virtual network in the second table(s).

### [Mode 7]

The control apparatus according to mode 5 or 6;
wherein the first table operation unit sets an entry(ies) in the first table(s) in the switch(es); and
wherein, in the entry(ies), a match condition for determining whether a received packet belongs to a virtual network and a processing content for recording information for determining a virtual network to which a packet(s) matching the match condition belongs in a packet header or metadata usable as a match condition in the second table(s) are set.

### [Mode 8]

The control apparatus according to any one of modes 5 to 7;
wherein the second table operation unit sets an entry(ies) including the information for determining a virtual network as a match condition in the second table(s).

### [Mode 9]

The control apparatus according to any one of modes 5 to 8;
wherein the first table operation unit sets an entry(ies) for dropping a packet(s) that is not processed by referring to the second table or redirecting the packet(s) to a predetermined destination in the first table(s) in the switch(es).

### [Mode 10]

The control apparatus according to any one of modes 5 to 9, further comprising:
a third table operation unit that sets an entry(ies) for determining whether a packet(s) selected by the first table(s) matches a predetermined access policy in a third table(s);
wherein the first table operation unit sets an action for referring to the third table(s) in an entry(ies) in the first table(s).

### [Mode 11]

The control apparatus according to any one of modes 5 to 10;
wherein the control apparatus sets an entry(ies) of the first and second tables in a tunnel endpoint(s) serving as an endpoint of a virtual tunnel used for communication between virtual machines that belong to a virtual network or a switch(es) arranged between a virtual machine and a tunnel endpoint.

### [Mode 12]

(See the communication apparatus according to the above second aspect)

### [Mode 13]

(See the communication system according to the above third aspect)

### [Mode 14]

(See the switch control method according to the above fourth aspect)

### [Mode 15]

(See the program according to the above fifth aspect)

The above modes 12 to 15 can be expanded in the same way as mode 1 is expanded to modes 2 to 11.

The disclosure of each of the above Non-Patent Literatures is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the scope of the claims of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

### REFERENCE SIGNS LIST

- 10A, 100, 100C, 100D: control apparatus
- 19, 109: switch control unit
- 20, 20A, 20B, 200, 200A, 200B: switch
- 21: control message transmission and reception unit
- 22: packet processing unit
- 23, 23-1, 23-2, 23-3, 230-0 to 230-2: table
- 30, 31: host
- 101: virtual network configuration management unit
- 102: access policy management unit
- 103, 113: processing determination unit
- 104, 124: first table operation unit
- 105, 125: second table operation unit
- 106, 126: third table operation unit
- 107: switch communication unit
- 111: filtering policy management unit
- 114, 115: table operation unit
- 121: first filtering policy management unit
- 122: second filtering policy management unit
- 311, 321: VM (virtual machine)
- 400: tunnel endpoint (TEP)

## Claims

1. A control apparatus, setting an entry(ies) including a rule(s) for processing a packet(s) in a switch(es);
wherein the control apparatus sets a first entry(ies) for filtering packets received by the switch(es) in a first table(s) included in the switch(es); and
wherein the control apparatus sets a second entry(ies) including a rule(s) for processing a packet(s) selected by the first entry(ies) from the received packets in a second table(s) included in the switch(es).

2. The control apparatus according to claim 1;
wherein the control apparatus sets at least one of the first and second entries including a condition(s) compared with the received packets in the switch(es); and
wherein at least one of the first and second entries includes a condition(s) compared with a plurality of received packets as a group.

3. The control apparatus according to claim 1 or 2;
wherein the control apparatus sets at least one of the first and second entries including a condition(s) compared with the received packets in the switch(es); and
wherein at least one of the first and second entries includes a condition(s) set as a wildcard(s).

4. The control apparatus according to any one of claims 1 to 3;
wherein the second entry(ies) includes a condition(s) in which information that corresponds to a source address of a received packet is set as a wildcard.

5. The control apparatus according to any one of claims 1 to 4, comprising:
a first table operation unit that sets an entry(ies) for sorting out a packet(s) that is processed by referring to the second table(s) from a packet(s) that is not processed by referring to the second table(s) in the first table(s); and
a second table operation unit that sets, on the basis of a packet(s) selected by the first table(s), an entry(ies) that defines processing applied to the selected packet(s) in the second table(s).

6. The control apparatus according to claim 5;
wherein the first table operation unit sets, on the basis of configuration information about a virtual network including the switch(es), an entry(ies) for selecting a packet(s) that belongs to the virtual network in the first table(s); and
wherein the second table operation unit sets an entry(ies) that defines processing applied to a packet(s) that belongs to the virtual network in the second table(s).

7. The control apparatus according to claim 5 or 6;
wherein the first table operation unit sets an entry(ies) in the first table(s) in the switch(es); and
wherein, in the entry(ies), a match condition for determining whether a received packet belongs to a virtual network and a processing content for recording information for determining a virtual network to which a packet(s) matching the match condition belongs in a packet header or metadata usable as a match condition in the second table(s) are set.

8. The control apparatus according to any one of claims 5 to 7;
wherein the second table operation unit sets an entry(ies) including the information for determining a virtual network as a match condition in the second table(s).

9. The control apparatus according to any one of claims 5 to 8;
wherein the first table operation unit sets an entry(ies) for dropping a packet(s) that is not processed by referring to the second table or redirecting the packet(s) to a predetermined destination in the first table(s) in the switch(es).

10. The control apparatus according to any one of claims 5 to 9, further comprising:
a third table operation unit that sets an entry(ies) for determining whether a packet(s) selected by the first table(s) matches a predetermined access policy in a third table(s);
wherein the first table operation unit sets an action for referring to the third table(s) in an entry(ies) in the first table(s).

11. The control apparatus according to any one of claims 5 to 10;
wherein the control apparatus sets an entry(ies) of the first and second tables in a tunnel endpoint(s) serving as an endpoint of a virtual tunnel used for communication between virtual machines that belong to a virtual network or a switch(es) arranged between a virtual machine and a tunnel endpoint.

12. A communication apparatus, receiving an entry(ies) including a rule(s) for processing a packet(s) from a control apparatus and processing the packet(s) in accordance with the entry(ies), the communication apparatus comprising:
a first table(s) that stores a first entry(ies) for filtering packets received by the communication apparatus; and
a second table(s) that stores a second entry(ies) including a rule(s) for processing a packet(s) selected by the first entry(ies) from the received packets.

13. The communication apparatus according to claim 12;
wherein the communication apparatus receives at least one of the first and second entries including a condition(s) compared with the received packets from the control apparatus; and
wherein at least one of the first and second entries includes a condition(s) compared with a plurality of received packets as a group.

14. The communication apparatus according to claim 12 or 13;
wherein the communication apparatus receives at least one of the first and second entries including a condition(s) compared with the received packets from the control apparatus; and
wherein at least one of the first and second entries includes a condition(s) set as a wildcard(s).

15. The communication apparatus according to any one of claims 12 to 14;
wherein the second entry(ies) includes a condition(s) in which information that corresponds to a source address of a received packet is set as a wildcard.

16. A communication system, comprising:
a communication apparatus(es); and
a control apparatus;
wherein the communication apparatus(es) comprises:
a first table(s) that stores a first entry(ies) for filtering received packets; and
a second table(s) that stores a second entry(ies) including a rule(s) for processing a packet(s) selected by the first entry(ies) from the received packets;
wherein the communication apparatus(es) receives an entry(ies) to be stored in the first or second table from the control apparatus and processes the packets in accordance with the entry(ies);
wherein the control apparatus sets the first entry(ies) for filtering packets received by the switch(es) in the first table(s) included in the switch(es); and
wherein the control apparatus sets the second entry(ies) including a rule(s) for processing a packet(s) selected by the first entry(ies) from the received packets in the second table(s) included in the switch(es).

17. The communication system according to claim 16;
wherein the control apparatus sets at least one of the first and second entries including a condition(s) compared with the received packets in the switch(es); and
wherein at least one of the first and second entries includes a condition(s) compared with a plurality of received packets as a group.

18. The communication system according to claim 16 or 17;
wherein the control apparatus sets at least one of the first and second entries including a condition(s) compared with the received packets in the switch(es); and
wherein at least one of the first and second entries includes a condition(s) set as a wildcard(s).

19. The communication system according to any one of claims 16 to 18;
wherein the second entry(ies) includes a condition(s) in which information that corresponds to a source address of a received packet is set as a wildcard.

20. The communication system according to any one of claims 16 to 19;
wherein the control apparatus comprises:
a first table operation unit that sets an entry(ies) for sorting out a packet(s) that is processed by referring to the second table(s) from a packet(s) that is not processed by referring to the second table(s) in the first table(s); and
a second table operation unit that sets, on the basis of a packet(s) selected by the first table(s), an entry(ies) that defines processing applied to the selected packet(s) in the second table(s).

21. The communication system according to claim 20;
wherein the first table operation unit of the switch(es) sets, on the basis of configuration information about a virtual network including the switch(es), an entry(ies) for selecting a packet(s) that belongs to the virtual network in the first table(s); and
wherein the second table operation unit sets an entry(ies) that defines processing applied to a packet(s) that belongs to the virtual network in the second table(s).

22. A switch control method, comprising steps of:
causing a control apparatus, which sets an entry(ies) including a rule(s) for processing a packet(s) in a switch(es), to set a first entry(ies) for filtering packets received by the switch(es) in a first table(s) included in the switch(es); and
causing the control apparatus to set a second entry(ies) including a rule(s) for processing a packet(s) selected by the first entry(ies) from the received packets in a second table(s) included in the switch(es).

23. The switch control method according to claim 22;
wherein the control apparatus sets at least one of the first and second entries including a condition(s) compared with the received packets in the switch(es); and
wherein at least one of the first and second entries includes a condition(s) compared with a plurality of received packets as a group.

24. The switch control method according to claim 22 or 23;
wherein the control apparatus sets at least one of the first and second entries including a condition(s) compared with the received packets in the switch(es); and
wherein at least one of the first and second entries includes a condition(s) set as a wildcard(s).

25. The switch control method according to any one of claims 22 to 24;
wherein the second entry(ies) includes a condition(s) in which information that corresponds to a source address of a received packet is set as a wildcard.

26. The switch control method according to any one of claims 22 to 25;
wherein an entry(ies) for sorting out a packet(s) that is processed by referring to the second table(s) from a packet(s) that is not processed by referring to the second table(s) is set in the first table(s); and
wherein, on the basis of a packet(s) selected by the first table(s), an entry(ies) that defines processing applied to the selected packet(s) is set in the second table(s).

27. The switch control method according to claim 26;
wherein an entry(ies) set in the first table(s) is an entry(ies) for selecting, on the basis of configuration information about a virtual network including the switch(es), a packet(s) that belongs to the virtual network; and
wherein an entry(ies) set in the second table(s) is an entry(ies) that defines processing applied to a packet(s) that belongs to the virtual network.

28. A program, causing a computer, which sets an entry(ies) including a rule(s) for processing a packet(s) in a switch(es), to perform processing for:
setting a first entry(ies) for filtering packets received by the switch(es) in a first table(s) included in the switch(es); and
setting a second entry(ies) including a rule(s) for processing a packet(s) selected by the first entry(ies) from the received packets in a second table(s) included in the switch(es).
